# EUROPEAN PATENT SPECIFICATION

(11) **EP 0 869 300 B1**
(45) Date of publication and mention of the grant of the patent: **25.02.2004**
(21) Application number: 97909641.9
(22) Date of filing: 27.10.1997
(51) Int. Cl.: F16H 61/16, F16H 59/66

(54) **VEHICLE CONTROL DEVICE**
KONTROLLVERFAHREN FÜR FAHRZEUG
DISPOSITIF DE REGULATION DE VEHICULE

(30) Priority: 25.10.1996 JP 30127396; 02.11.1996 JP 30729596; 06.11.1996 JP 31134296
(43) Date of publication of application: 07.10.1998
(73) Proprietor: EQUOS RESEARCH CO. LTD., Chiyoda-ku, Tokyo 101 (JP)
(72) Inventor: ARUGA, Hideki, Chiyoda-ku Tokyo 101 (JP); SHIRAI, Hisanori, Chiyoda-ku Tokyo 101 (JP)
(74) Representative: VOSSIUS & PARTNER
(86) International application number: PCT/JP1997/003887
(87) International publication number: WO 1998/019083

(56) References cited:
- JP-A- 5 322 591
- JP-A- 8 159 278
- JP-A- 62 292 947
- JP-B- 51 022 697
- PATENT ABSTRACTS OF JAPAN vol. 015, no. 321 (M-1147), 15 August 1991 (1991-08-15) & JP 03 121367 A (NISSAN MOTOR CO LTD), 23 May 1991 (1991-05-23)

## Description

This invention relates to a vehicle control device that conducts vehicle control based on road information, and more particularly to a vehicle control device that controls transmission gear ratios based on information of the road ahead.

Among the prior arts for controlling transmission speed by utilizing road data stored in a navigation system, JP-B-6-272753 has proposed a control device that controls transmission speed based on various information including a vehicle speed variation and an accelerator's opening degree that can be detected by sensors, and map information read out from the navigation system. Such a device controls a vehicle to have an optimum transmission speed in conformity to the varying drive condition.

With the above-described prior art transmission control devices, road data is obtained from the navigation system in order to determine a transmission speed in conformity to the road condition on which the vehicle is now running. However, all informations to be used for such prior art control merely indicate the current drive conditions. It is not at all possible to control the transmission in anticipation of future change of the drive conditions.

For example, when the vehicle goes up a slope, the prior art control device could not change a transmission speed until the vehicle goes up to a certain level that results in a change in an actual vehicle speed or an accelerator's opening degree. Moreover, this control intends to follow the road information but neglect the driver's will or intention. More specifically, the transmission speed control based on the road information has a good adaptability to surrounding conditions, but tends to force the driver to obey a perfunctory control.

Further, when the vehicle is about to drive on a winding road, the transmission should be controlled to keep gear ratios within a relatively low range. However, in accordance with the prior art control, the transmission speed would be shifted up in response to release from an accelerator pedal, which reduces a drive power and thus does not allow smooth acceleration to follow the driver's intention. When the vehicle enters a curve with the accelerator pedal being not stepped on, it is difficult to make appropriate transmission control that the driver demands.

JP-A-03121367 discloses a speed change control device of automatic transmission which is to attain speed reduction required at the time of completing passing and to improve the operability by starting a timer means in response to a signal of a direction change detecting means to inhibit ship-up of a transmission until it reaches a designated time and cancle the inhibition when it reaches the designated time.
JP-A-8159278 discloses a gear shift control device for automatic transmission comprising a throttle sensor, a car speed sensor, a brake switch and a horizontal sensor serving as a curve running detecting means. Output signals from the curve running detecting means are inputted to A/T control unit. Based on an input signal, a target gear shift speed is determined and a signal is outputted.
JP-A-62292947 discloses a control device for automatic transmission which, when a vehicle travels, indicates road information, e.g., between an area around the present position of the vehicle and the destination, from a navigation device to guide the travel to the destination. On the way of this travel, the gear change stages of an automatic transmission are automatically changed by the control means in accordance with vehicle travelling conditions detected by travelling condition detecting means. Also, when the control pattern of the gear change stages set by the control means is changed by a changing means in accordance with the present position detected by a present position detecting device from a road information, i.e., the road condition around the vehicle, e.g., when travelling on a curve, the gear change is prohibited.
JP-A-5322591 discloses an automatic speed change control device which is constituted of a speed change control device, a transmission, a slot opening degree sensor, a vehicle speed sensor, a selecting lever switch and a navigation device. The speed change control device comprises a speed change control part, a memory, a flat road speed-change-map, an upward slope speed-change-map, a downward slope speed-change-map and a switching part.
JP-B-51022697 discloses a further vehicle control device.
DE-A-4337163 discloses a vehicle control device for an automatic transmission wherein the transmission control device is connected to a computer which saves in a learning phase data received by sensors in accordance with the road travelled. If the computer is not in a learn-phase, the present sensor data are compared to the saved sensor data.

Accordingly, it is an object of this invention to achieve vehicle control that is well conformable to the driver's intention, and more particularly to provide vehicle control device that achieves more favourable control in response to driver's decelerating operation.

The object of the present invention is achieved by the features of the claims.

The present invention will be hereinbelow described in more detail in reference to the accompanying drawings.

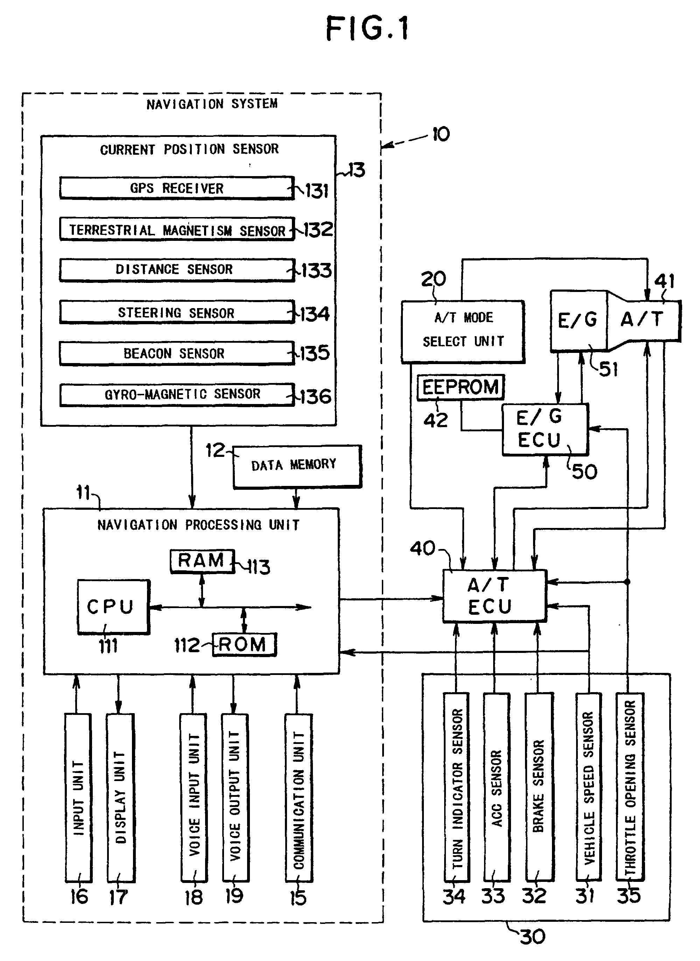

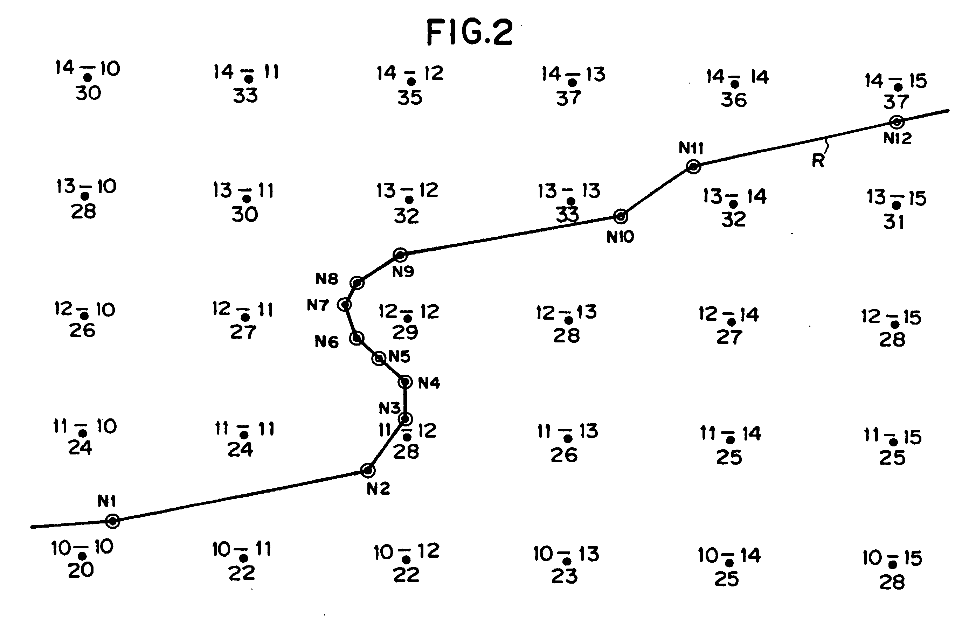

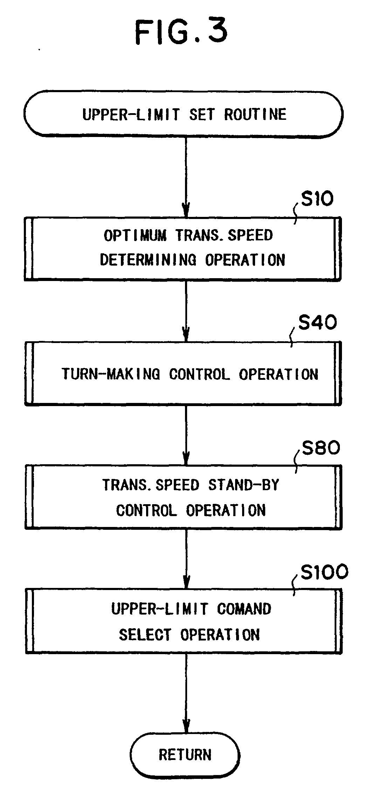

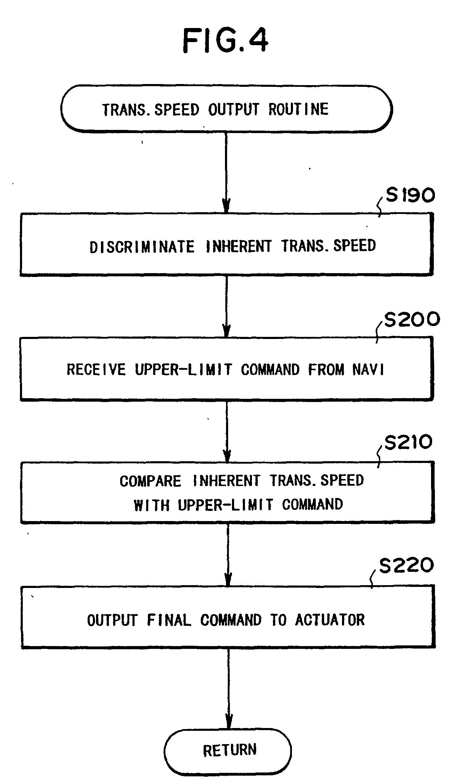

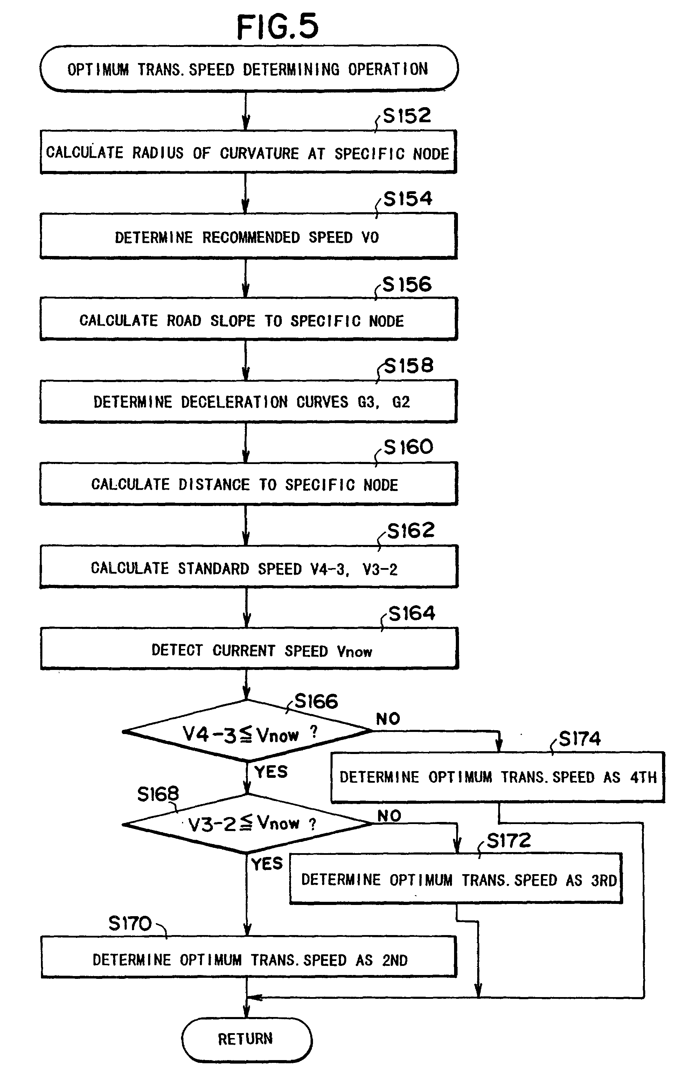

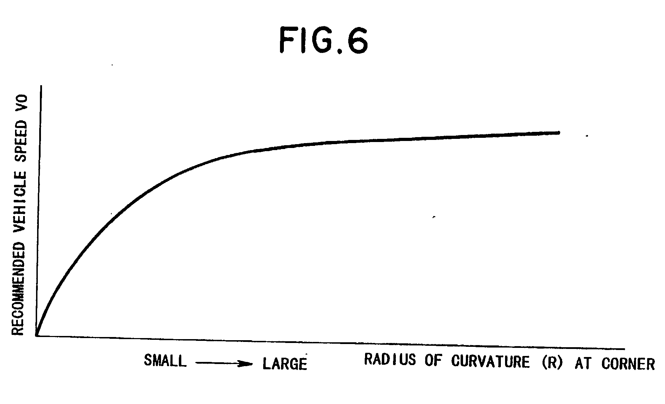

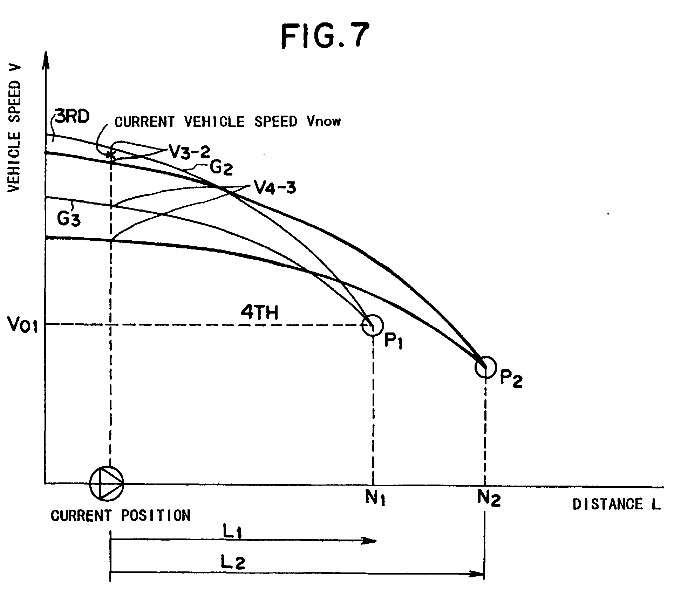

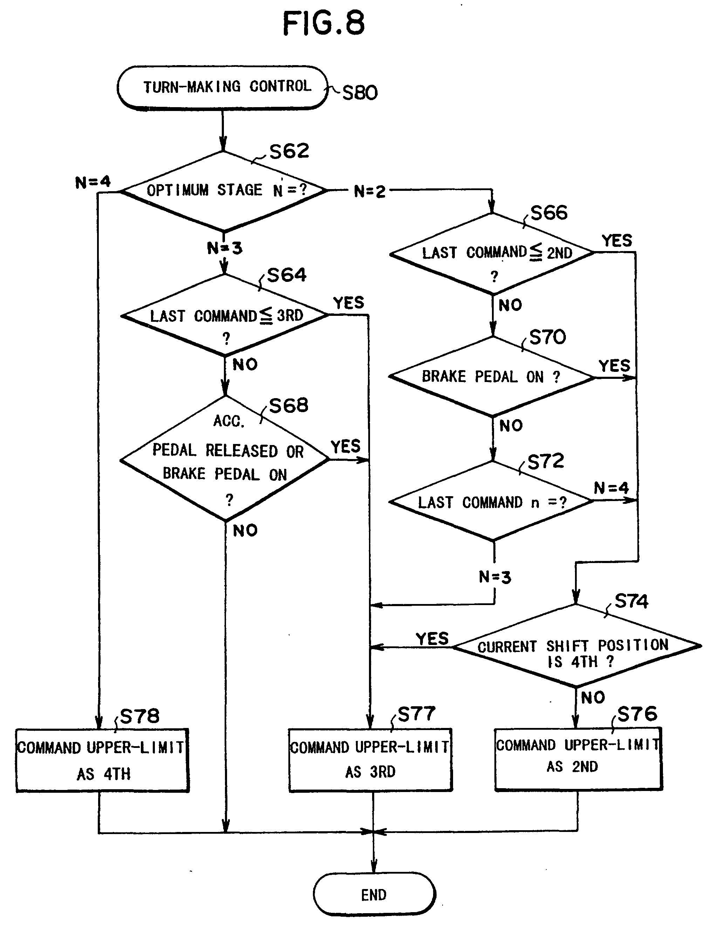

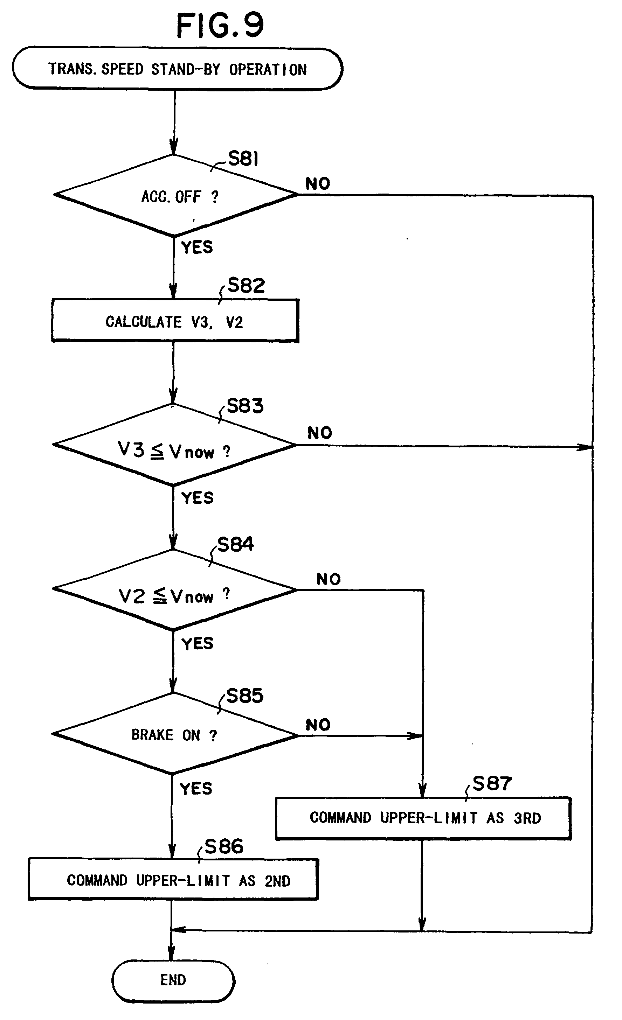

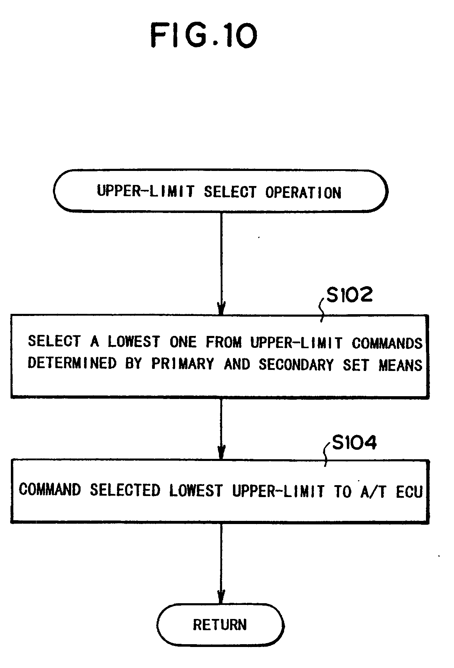

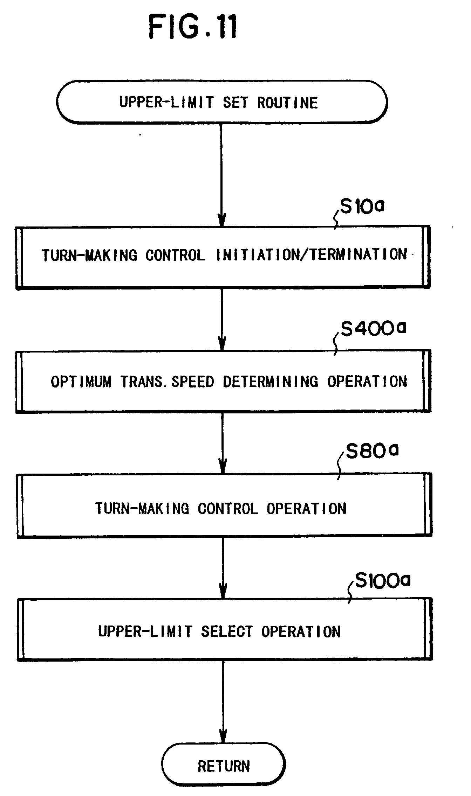

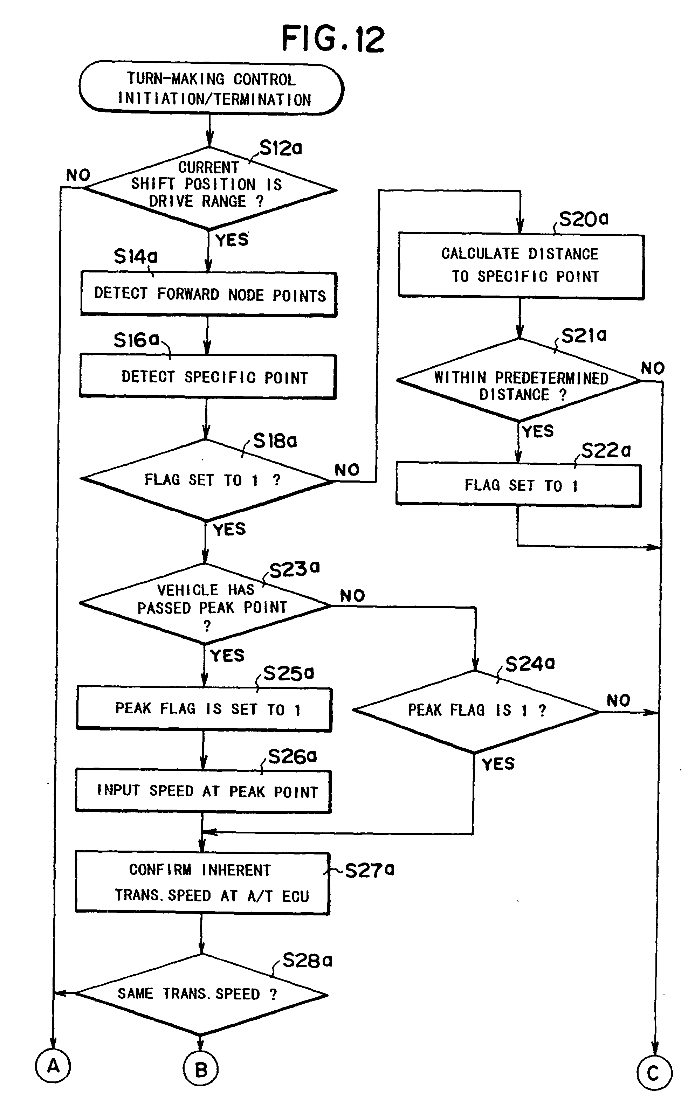

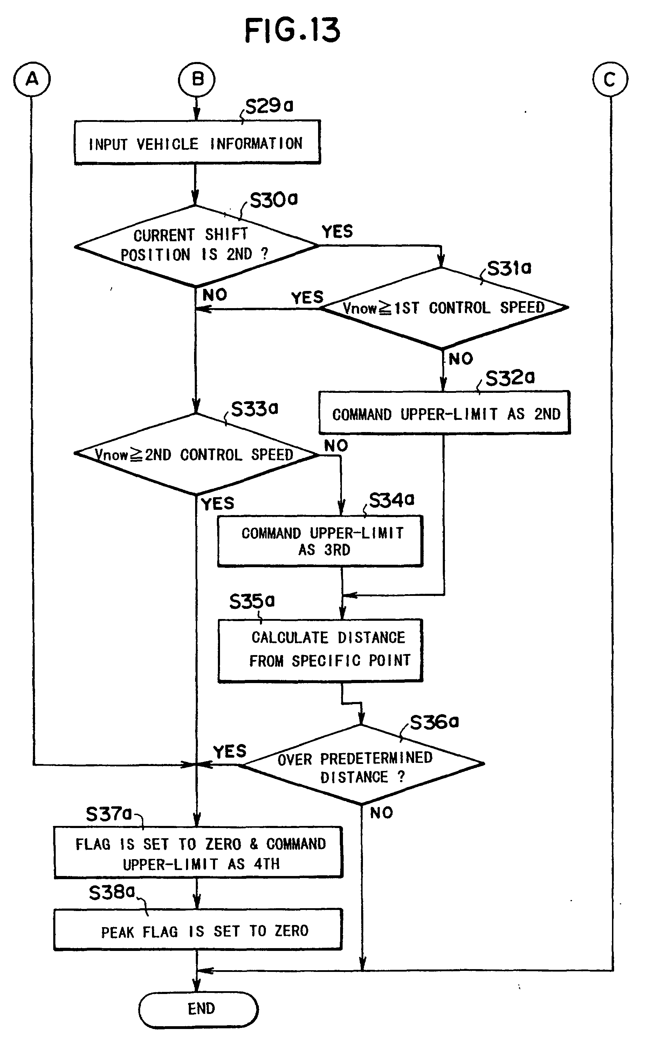

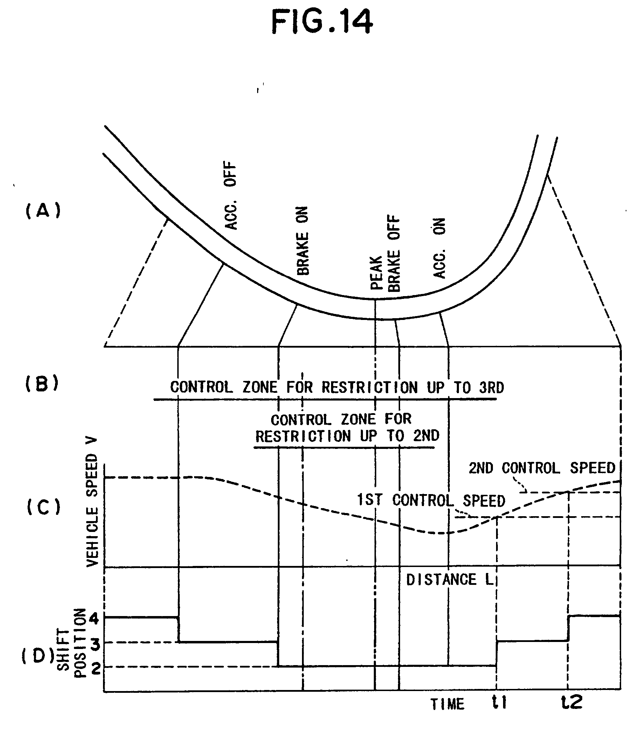

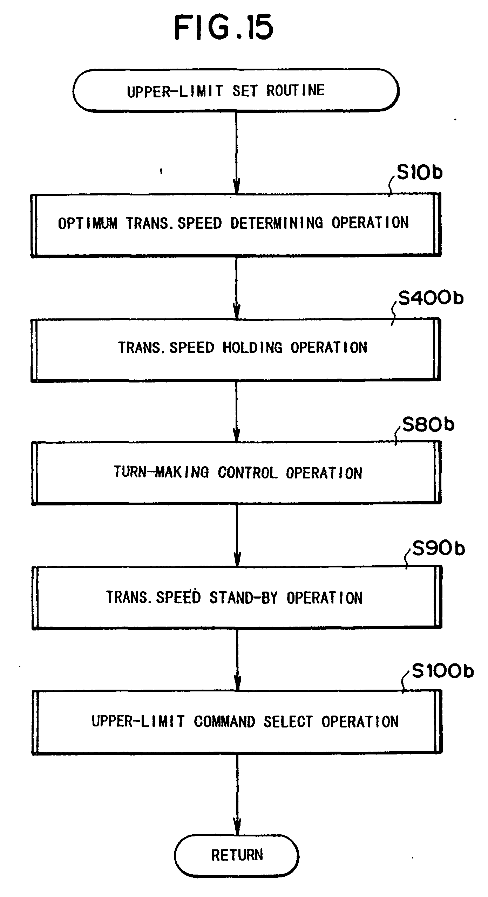

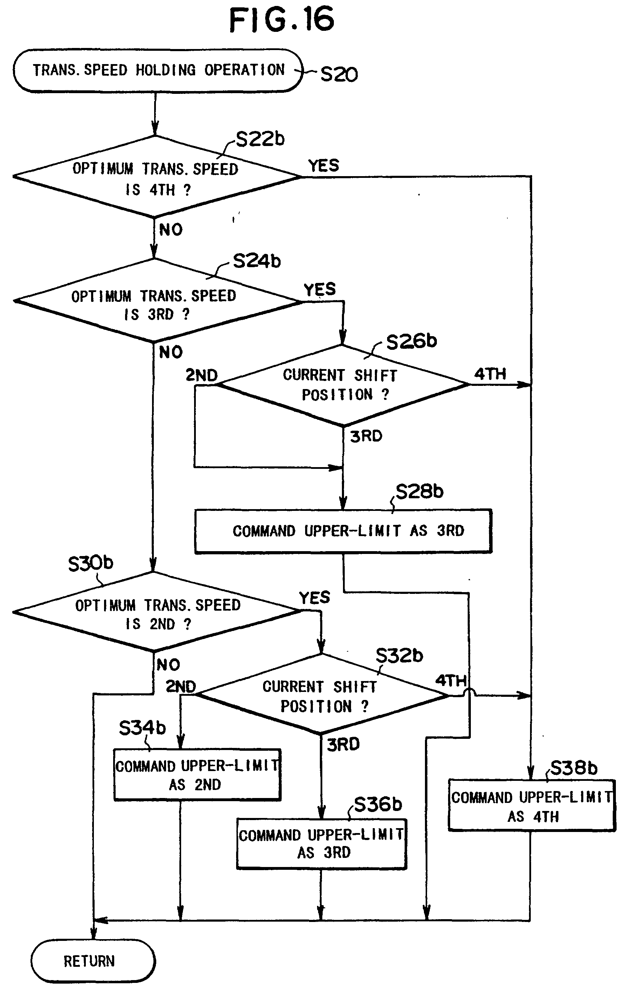

Fig. 1 is a block diagram showing a preferred embodiment of the present invention, Fig. 2 is an explanatory diagram showing road data, Fig. 3 is a flowchart showing an upper-limit set routine of the first embodiment, Fig. 4 is a flowchart showing a transmission speed output routine of the first embodiment, Fig. 5 is a flowchart showing an appropriate transmission speed determining sub-routine of the first embodiment, Fig. 6 is a map for use in determining a recommended vehicle speed, Fig. 7 is a map for use in determining an appropriate transmission speed, Fig. 8 is a flowchart showing a turn-making control sub-routine of the first embodiment, Fig. 9 is a flowchart showing a transmission speed stand-by control sub-routine of the first embodiment, Fig. 10 is a flowchart showing an upper-limit command selecting sub-routine of the first embodiment, Fig. 11 is a flowchart showing an upper-limit determining routine of a comparative embodiment, Figs. 12 and 13 shows a flowchart of a turn-making control command/release routine of the comparative embodiment, Fig. 14 is a time chart of control operation of the comparative embodiment, Fig. 15 is a flowchart showing an upper-limit determining routine of a second embodiment, and Fig. 16 is a flowchart showing a transmission hold control sub-routine of the second embodiment.

Fig. 1 is a block diagram showing a vehicle control device embodying the present invention.

The vehicle control device 1 of this invention includes a navigation system 10, an automatic transmission 41, an A/T mode select unit 20 and a vehicle condition sensor 30. Navigation system 10 has a navigation processing unit 11, a data memory unit 12 that stores road information, a current position sensor 13, a communication unit 15, an input unit 16, a display unit 17, a voice input unit 18 and a voice output unit 19.

Navigation processing unit 11 has a central processing unit (CPU) 111 that operates in response to the input information to perform various data processing operation and output the results of operation. To CPU 111 are connected ROM 112 and RAM 113 through data bus lines. ROM 112 is a read-only-memory storing programs for searching of a drive route to the destination, drive guidance along the drive route, determination of a certain section on the drive route, for example. RAM 113 is a random-access-memory to be used as a working memory when CPU 111 performs data processing operation.

Data memory unit 12 has a map data file, a street crossing data file, a node data hotels, gas stations, sightseeing spots in the respective areas. Data stored in these files are used not only for searching of a drive route, but also for description of various information, such as a guide map along the drive route, photograph and/or figures featuring a street crossing or any places in the drive route, a distance to the street crossing, a drive direction at the street crossing, etc., through display 17 and/or voice output unit 19.

Among information stored in these files, the files respectively storing street crossing data, node data and road data are used in main for route searching in the navigation system. These files store data regarding road width, slope or gradient, road surface condition, radius of curvature, street crossing, T-shaped crossing, number of road lanes, lane-decreasing point, entrance to the comer, railway crossing, exit rampway of speedway, tollgate, the point where road-width becomes narrow-minded, downhill road, uphill road, latitude and longitude indicating absolute coordinates, altitude of absolute coordinates, absolute position and altitude of nodes on roads, etc. Road information comprises the above-described data detected with regard to the current vehicle position, and comprises in main information of road ahead of the current position in the drive direction. For example, such information includes street crossings positioned forward in the drive route, corners, nodes and radii of curvature in predetermined section, distance from the current position to a predetermined point such as a street crossing or to a predetermined section, etc. The road information also includes various road condition detected by respective sensors and obtained through communication means, etc.

Any memory devices such as DVD, MO, CD-ROM, optical disk, magnetic tape, IC card and optical card may be used as the data files. Although CD-ROM or other memory device having great memory capacity is preferably used as the files, IC card may be used for other data files requiring less memory capacity. Data memory unit 12 constitutes road information memory of the present invention.

Current position sensor 13 has a GPS receiver 131, a terrestrial magnetism sensor 132, a distance sensor 133, a steering sensor 134, a beacon sensor 135 and a gyro-magnetic sensor 136. GPS receiver 131 receives radio waves from earth satellites to determine the vehicle position. Terrestrial magnetism sensor 132 detects terrestrial magnetism to determine the direction in which the vehicle advances. Distance sensor 133 may be a measuring device of a type wherein the number of wheel rotation is detected followed by calculation or another type wherein acceleration is detected followed by twice integration. Steering sensor 134 is typically an optical rotation sensor or a rotation-resistant volume mounted to a rotating member of a steering, but may be a steering angle sensor mounted to the wheel. Beacon sensor 135 receives positional information from beacons arranged on roads. Gyro-magnetic sensor 136 may be a gas-rate or vibration type gyro-magnetic sensor that detects a turning angle velocity of the vehicle followed by integration to determine the vehicle running direction.

GPS receiver 131 and beacon sensor 135 can solely act to measure the vehicle position. Further, the absolute position of the vehicle may be determined by combination of a distance detected by distance sensor 133 and a direction detected by terrestrial magnetism sensor 132 and/or gyromagnetic sensor 136, or by combination of a distance detected by distance sensor 133 and a steering angle detected by steering sensor 134.

Communication unit 15 transmits and receives data to and from FM transmission units and telephone circuits. For example, it receives data regarding road information including traffic jams and traffic accident information that are supplied from a traffic information center.

Input unit 16 is used to input any data for, for example, correction of the current position at the beginning of driving and for input of the destination. An example of input unit 16 is a touch panel arranged on a display unit 17 and adapted to input any information by a touch on a key or menu represented thereon. Another example of Input unit 16 is a keyboard, a mouse, a bar code reader, a write pen or a remote controllable input device. Input means 16 constitutes destination set means of the present invention.

Display unit 17 is used to represent, for example, guidance to operation, operation menu, operation keys, a recommended drive route to the destination determined by an user's request, and a guide map along the drive route. As display unit 17 may be used a CRT display, a liquid crystal display, a plasma display or a hologram device that projects a hologram onto a front glass. Display unit 17 constitutes announcement means for providing visual information to the driver to let him or her know the contents of the transmission control.

Voice input unit 18 comprises a microphone, for example, through which necessary information can be inputted through a voice of an operator. Voice output unit 19 has a voice synthesizing device and a speaker, thereby outputting the synthesized voice guide information. In addition to the synthesized voice guide information, various guide information that have been recorded on a tape may also been outputted through the speaker. The voice guide information may be a combination of the synthesized voice and the recorded voice.

With the above-described arrangement, the navigation system operates to provide road information around the vehicle current position to the driver, thereby guiding the driver to drive along a specific route to the destination. More particularly, when the destination is inputted through input device 16, navigation processing unit 11 operates to selectively find out a recommended drive route to the destination, based on the vehicle current position detected by current position sensor 13 and the road information read out from data memory unit 12. The drive route is outputted to display unit 17. The drive route shown on display unit 17 cooperates with the voice information outputted through voice output unit 19 to lead the driver to the destination. When the destination is not inputted, navigation processing unit 11 outputs only the road information around the vehicle current position to display unit 17.

With the above-described navigation system 10, current position sensor 13 comprises the current position sensor means, and data memory unit 12 and navigation processing unit 11 cooperate with each other to constitute the road information obtaining means. A specific point positioned forward of the vehicle current position in the drive direction is determined by navigation processing unit 11, based on the current position and the drive direction of the vehicle, both detected by current position sensor 13, and the road information stored in data memory unit 12. Specific point sensor means is constituted by current position sensor 13, data memory unit 12 and navigation processing unit 11. Distance calculating means is constituted by current position sensor 13, data memory unit 12 and navigation processing unit 11.

Drive route search means is constituted by input device 16, current position sensor 13. data memory unit 12 and navigation processing unit 11.

The road data stored in data memory unit 12 is composed of node-connecting segments. Fig. 2 is a diagram showing an example of the road data stored in data memory unit 12, wherein a solid line R shows a shape of the road. The road shape is represented by nodes (N1, N2, ...) and segments connected between adjacent two nodes. Each node is defined at least by its coordinates (which is in this embodiment the absolute coordinates comprising latitude and longitude).

In this embodiment, the road shape is also defined by altitude, as well as by nodes and segments. Altitude data are given to points arranged at 250-meter spacings with each other in lateral and longitudinal directions. For example, a point of (10-10) is at the altitude of 20 meters and another point of (10-11) is 22 meters, as shown in fig. 2.

In this embodiment, the average curvature, the road slope, the altitude variation, the radius of curvature, etc. are determined by relationship between the node positions and the altitude data surrounding the respective nodes. Although the altitude data are given to spaced points as stated above to minimize the data volume, it may be possible that the respective nodes has their altitude data. It is also possible that each road section or segment has its slope data, which is used in combination with others to determine the altitude of a specific node point.

The drive route may have been programmed in the navigation system. When no drive route has been programmed in the navigation system, it may be an anticipated drive route to go straight.

The above-described navigation processing unit 11 determines an upper limit of shiftable transmission speeds in response to the respective road information, whereby a command signal indicating the upper limit speed is outputted to the automatic transmission to be described later.

A/T mode select unit 20 is used to select a shift position and a transmission control mode. A/T mode select unit 20 constitutes shift position sensor means of the present invention.

A vehicle condition sensor 30 that detects various vehicle condition including the drive condition has vehicle speed sensor means or a vehicle speed sensor 31, decelerating operation sensor means comprising a break sensor 32, an accelerator sensor 33 and a winker sensor 34, and a throttle opening sensor 35. Vehicle speed sensor 31 detects a vehicle speed V. Break sensor 32 detects if a break pedal is stepped on (ON/OFF). Accelerator sensor 33 detects an accelerator's opening degree α . A sensor 34 detects ON/OFF of a turn signal indicator switch. Throttle opening sensor 35 detects a throttle opening degree θ. Drive condition sensor means is constituted by vehicle speed sensor 31, and also by another sensor in A/T 41 that detects a current transmission speed. Accelerator sensor 33 also acts as announcement means.

When detecting that some decelerating operation begins, at least one of the corresponding break indicating signal, accelerator's opening degree indicating signal and turn indicating signal is supplied to navigation processing unit 11. The vehicle speed V detected by vehicle speed sensor 31 is supplied both to navigation processing unit 11 and an electric control circuit 40 to be described later. The throttle opening degree detected by throttle opening sensor 35 is supplied to electric control circuit 40.

Beggining of driver's decelerating operation may be detected when the break signal turns ON. It may be possible that a stepping degree of the break pedal is detected, in which case a degree of deceleration, for example. a need of emergent speed-down is inferred in further consideration of the detected stepping degree of the break pedal. The beginning of driver's decelerating operation may also be detected by variation of the accelerator opening degree. More particularly, when the accelerator opening degree is very small but still further decreased by more than a predetermined percentage (that is a percentage of a decrease of the stepping amount with respect to the previous small stepping amount of the accelerator pedal), it may be discriminated that the driver begins decelerating operation. In summary, the driver's operation of greatly decreasing the stepping amount may be recognized as an initial step of deceleration and, therefore, may be detected as a kind of decelerating operation.

Such detection may also be indicated by variation (decrease) of the accelerator opening α, variation (decrease) of vehicle speed, variation (decrease) of acceleration, etc. These parameters may be combined with the accelerator opening degree α , after it is changed, to detect that decelerating operation begins. For example, when the vehicle is running only by inertia the accelerator opening degree α is nearly zero. Accordingly, α ≒ 0 does not always mean that the driver begins decelerating operation. Thus, when there is a sufficient decrease of the accelerator opening and when the decreased accelerator opening becomes substantially zero, then it is inferred in the affirmative that there is an initial step of the driver's decelerating operation.

Beginning of the driver's decelerating operation may also be inferred by a change of throttle opening (that is an engine torque). As having been described with regard to the case wherein the starting operation of deceleration is judged based on the accelerator opening degrees, a change of the throttle opening degrees (an amount of decrease of the throttle opening, a decrease of the velocity speed, a decrease of deceleration) may be taken into consideration in this case.

In still another embodiment, beginning of the driver's decelerating operation is inferred based on operation or non-operation of the break pedal and the accelerator pedal. By way of example, the affirmative inference that the driver begins decelerating operation is made when either one of stepping-on of the break pedal and release from the accelerator pedal is detected. Alternatively, the affirmative inference of beginning of the driver's decelerating operation is made only when detecting the breaking operation and no-operation of the accelerator pedal. This would more faithfully follow the driver's intention of deceleration.

In still another embodiment, beginning of the driver's decelerating operation is anticipated by ON signal indicating the turn indicating light now in operation. In this embodiment, it is preferable to further take into consideration the velocity speed when the blinker signal is ON. For example, if the vehicle speed still exceeds a predetermined speed at which the vehicle could safely enter a street crossing at the time when the turn indicating signal becomes ON, it could be inferred that such switch-on operation of the turn indicating signal is an initial step of the driver's decelerating operation. If the vehicle speed has been lowered to below the predetermined speed at the time when the turn indicating signal turns ON, it could be inferred that no decelerating operation is initiated.

Vehicle condition sensor unit 30 may include a light sensor that detects lighting-up of headlamps, and a wiper sensor that detects operation of a wiper. The light sensor may comprise a switch operated to turn the headlamps on and off. The wiper sensor may comprise a switch for actuating the wiper. The headlamps being lightened up would suggest that it becomes darkened around the vehicle and, therefore, may be considered as one of factors in inferring beginning of the driver's decelerating operation. The wiper in operation would suggest rainfall or snowfall which decreases a friction coefficient of the road surface and, therefore, may also be considered as a factor in inferring beginning or necessity of the driver's decelerating operation. In other words, turning-on of the headlamps and/or the wiper would increase the need of deceleration during the succeeding drive and could be followed by the driver's positive decelerating operation (for example, stepping of the break pedal and/or release from the accelerator pedal). Thus, consideration of these factors will facilitate the control efficiency of the present system. The above-described factors to be used to infer an initial step of the driver's decelerating operation will be referred to as "event" in the following description.

The automatic transmission comprises a mechanism unit 41 (referred to by A/T in the drawings) including a gear train composed in main of planetary gears and a hydraulic circuit for engagement and dis-engagement between components of the gear train to provide a multi transmission speed, and an electric control circuit 40 (hereinbelow referred to by A/T ECU) for controlling mechanism unit 41.

Navigation system unit 10 and A/T ECU 40 are connected with each other by communication lines for mutual communication.

To A/T ECU 40 are connected vehicle speed sensor 31 and throttle opening sensor 35. A vehicle speed signal from sensor 31 and a throttle opening signal from sensor 35 are supplied to A/T ECU 40. A shift position signal indicating a shift position selected by AT mode selecting unit 20 is supplied to A/T ECU 40 from a shift position sensor (not shown) mounted to mechanism unit 41.

From A/T ECU 40 is outputted a drive signal to an actuator (hydraulic solenoid) in the hydraulic circuit of mechanism unit 41, in response to which the actuator operates to control the transmission speed. A/T ECU 40 is controlled by control programs stored in EEP-ROM 42. For example, the transmission speed is determined, in response to the throttle opening degree detected by throttle opening sensor 35 and the vehicle speed detected by vehicle speed sensor 31, in reference to memory tables (transmission maps). The transmission maps selectively determine a specific one of the transmission speeds.

The transmission maps have been prepared separately for a normal mode and a sport mode, one of which is automatically selected in response to the transmission mode indicating signal supplied from navigation processing unit 11. The transmission mode may also be changed manually by the driver's operation of AT mode selecting unit 20.

The normal mode stores an economic drive pattern having a good balance of fuel consumption and powerfulness, which is suitably applicable to usual drive condition. Powerfulness is much importantly considered in the sport mode which is suitably applicable to drive around a mountain area or hill-climbing drive, fqr example.

In this embodiment, the transmission control is made by determining the upper-limit of the transmission speeds, that is by prohibiting shift-up to speed(s) higher than the determined upper-limit speed, while not changing the usual transmission maps. Accordingly, any transmission map may be utilized for usual transmission control.

A shift lever equipped in AT mode selecting unit 20 has six selectable shift positions, that is, a parking position, a reverse position, a neutral position, a drive position, a second speed position and a low speed position. The shift lever is mechanically connected to the shift position sensor, not shown, mounted to mechanism unit 41.

When the shift lever is in the drive position, any one of 1st to 4th gear speeds in transmission can be selected. Either of 1st and 2nd gear speeds in transmission speeds is selectable in the second speed position. In the low speed position only 1st gear speed is applicable. In this embodiment, navigation system 10 performs the automatic transmission control operation when the shift lever is held at the drive position. When navigation system 11 commands that the upper limit of the transmission speeds is 3rd gear speeds, then the drive signal outputted therefrom ranges 1st to 3rd speeds, which is supplied to an actuator 42 that actually determines the gear ratio in response to the drive signal. For example, when A/T ECU 40 determines 4th gear speed but navigation system 11 commands that the transmission speed should be 3rd gear speed, then the drive signal commanding 3rd gear speed is supplied.

The shift position and the transmission mode are also supplied via A/T ECU 40 to navigation processing unit 11.

In a modified embodiment, navigation processing unit 11 stores in advance transmission maps of A/T ECU 40, in which case navigation processing unit 11 determines an actual transmission speed within a restricted range, in reference to the transmission map, which is outputted to A/T ECU 40.

In response to the throttle opening signal from throttle opening sensor 35 and an engine revolution and others (coolant temperature, sensor signals, etc.) from an engine (referred to by E/G in the drawings), an engine control unit (referred to by E/G ECU in the drawings) 50 operates to control the engine 51 by regulating a fuel injection, for example.

With the above-described arrangement, the transmission speed control is conducted based on the road information in the navigation system as follows.

### FIRST EMBODIMENT

The contents of the transmission speed control conducted by navigation processing unit 11 and A/T ECU 40 in this embodiment will be described in reference to flowcharts of Figs. 3-5, 8 and 9. Fig. 3 shows an upper-limit set routine which is a part of operation of navigation processing unit 11. Fig. 4 shows a transmission speed output routine which is a part of operation of A/T ECU 40.

As shown in Fig. 3, the upper-limit set routine comprises an optimum transmission speed determining sub-routine (S10), a turn-making control sub-routine (S40), a transmission speed stand-by sub-routine (S80) and an upper-limit command selecting sub-routine (S100).

As shown in Fig. 4, the transmission speed output routine comprises steps of discriminating an inherent transmission speed in accordance with a transmission map in EEP-ROM 42 (S190), receiving an upper-limit transmission speed command (i.e., a signal commanding a shiftable range of transmission speeds) from navigation processing unit 11 (S200), comparing the command with the inherent transmission speed to determine a specific transmission speed which should be within the shiftable range (S210), and outputting a command signal to an A/T mechanical unit 60. S210 is operation of restriction means and comparison means.

The contents of the optimum transmission speed determining sub-routine (S10) will be described in reference to the flowchart of Fig. 5.

Navigation processing unit 11 calculates road curvature of predetermined sections, each including a node, forward of the current position (S152), and determines a recommended vehicle speed V0 for each section, based on the calculated road curvature S154). This step of S154 is operation of recommended vehicle speed determining means. There are many methods of calculating the road curvature and any one can be used here. For example, the road curvature of a section including a specific node may be calculated by an angle between two lines connecting the specific node and adjacent two node respectively.

Navigation processing unit 11 has a map for use in determination of recommended vehicle speed V0 as shown in Fig. 6. It thus determines a recommended vehicle speed V0 when a vehicle passes the respective node points.

In this map, a recommended vehicle speed V0 becomes lower as the road curvature is smaller, whereas it increases with the latter.

It calculates a road slope from the current position to a specific node position in the foregoing manner (S156), and then determines deceleration curves G2 and G3 (S158).

Fig. 7 shows examples of deceleration curves G2 and G3 determined at S158. The transmission speeds should preferably below 3rd when a degree of deceleration is plotted above a deceleration curve G3. The transmission speeds should preferably below 2nd when a degree of deceleration is above the deceleration curve G2. This is because a lower transmission ratio contributes stability and breaking efficiency when a vehicle makes slow-down.

In this embodiment, a degree of deceleration is determined by taking road slope into consideration. This is because driving on an even road and on an uphill or downhill require different degrees of deceleration to achieve the actually same effect of speed-down. When a driver intends to slow down while driving on an uphill, in some case, a sufficient degree of deceleration could be automatically obtained with no shift-down operation.

A plurality of deceleration curves G3, G2 may be prepared for different road slope. It is also possible that one deceleration curve G3, G2 prepared for a flatland is revised depending on road slope data. Data of G3 and G2 may be revised in accordance with weight of the vehicle which varies with the number of passengers. The vehicle weight may be calculated by deceleration at the time when a specific output shaft torque is generated.

Next, navigation processing unit 11 detects a distance L of a section from the current position to a specific node point (N1, N2 in Fig. 7 where the vehicle should go through at a recommended vehicle speed V0), at S160. This step of S160 is operation of distance calculating means.

It then calculates a vehicle speed V4-3 from the recommended vehicle speed V0, the sectional distance L and the deceleration curve G3. The vehicle speed V4-3 represents a standard vehicle speed from which the vehicle may decelerate to the recommended vehicle speed V0 by deceleration of the curve G3 over the distance L.

Likewise, it calculates a vehicle speed V3-2 from the recommended vehicle speed V0, the sectional distance L and the deceleration curve G2. The vehicle speed V3-2 represents another standard vehicle speed from which the vehicle may decelerate to the recommended vehicle speed V0 by deceleration of the curve G2 over the distance L.

It then discriminates if the vehicle speed V4-3 is equal to or lower than the current vehicle speed Vnow (S166). If the vehicle speed V4-3 is equal to or lower than the current vehicle speed Vnow, it means that a greater degree of deceleration than the deceleration curve G3 is required to decelerate the vehicle from the current speed to the recommended speed within a distance L. On the other hand, if the vehicle speed V4-3 exceeds the current vehicle speed Vnow (No at S166), it means that no special transmission speed control is necessary. In this case, since the automatic transmission is 4-speed transmission in this embodiment, an optimum transmission speed is determined as 4th (S174) and the procedure is returned to the beginning.

The vehicle speeds V4-3, V3-2 are standard vehicle speeds and the step of S166 is operation of standard vehicle speed calculating means.

When the vehicle speed V4-3 is equal to or smaller than the current vehicle speed Vnow (Yes at S166), then it discriminates if the vehicle speed V3-2 is equal to or lower than the current vehicle speed Vnow (S168).

When the vehicle speed V4-3 is equal to or lower than the current vehicle speed Vnow and the vehicle speed V3-2 is larger than the current vehicle speed Vnow (as in the case of an example plotted in Fig. 7), 3rd speed is determined as an optimum vehicle speed (S172), and the procedure is returned to the beginning. This is the case where the transmission speeds should not exceed 3rd speed, but too much severe deceleration is not required.

When the vehicle speeds V4-3 and V3-2 are both equal to or lower than the current vehicle speed Vnow, 2nd speed is determined as an optimum vehicle speed (S170), and the procedure is returned to the beginning. This is the case where the transmission speeds should not exceed 2nd speed. This step is applicable when the vehicle should decelerate to below the recommended vehicle speed at the node point N2.

The flowchart of Fig. 5 is operation of the optimum transmission speed determining means.

The turn-making control operation (S40) at a curve or comer will be described in reference to the sub-routine thereof shown in Fig. 8.

At a step S62 in Fig. 8, navigation processing unit 11 confirms the optimum transmission speed which has been determined by the preceding procedure. When 4th speed has been selected, it outputs to A/T ECU 40 a command that the upper limit of the transmission speeds should be 4th (S78), and the procedure terminates. When 3rd speed has been selected, the procedure is advanced to a step S64 where it discriminates if the last time control routine has determined an upper limit command (hereinlater referred to as "last command") designating 3rd or lower transmission speed. When the last command designated 4th (No at S64), it then discriminates if an accelerator pedal is released or a break pedal is stepped on (S68). Unless such operation is actually carried out (No at S68), the procedure terminates so that the last command designating 4th is maintained. On the other hand, when the accelerator pedal is released or a break pedal is stepped on (Yes at S68), it supplies a command that the upper limit should be 3rd (S77). When the last command designated 3rd or lower (Yes at S64), with no further discrimination, it supplies a command that the upper limit should be 3rd (S77).

As above-described, in this embodiment, shift-down control operation is carried out only when some "event" happens. Of course it is possible that shift-down control from 4th to 3rd is made immediately after it is confirmed at S62 that the optimum shift position is 3rd. Such control, however, would result in sudden shift-down without any notice to the driver. To obviate this problem, the control of this embodiment requires some "event", that is, release of the accelerator pedal or active operation of the break pedal, which may be regarded as a driver's positive intention of deceleration, in response to which a command of shift-down from 4th to 3rd is supplied.

When the optimum shift position N is 2nd, which is confirmed at S62, the control procedure is advanced to a step S66 where it is discriminated if the last command designated 2nd or lower. When the last command designated 3rd or 4th (No at S66), it is then discriminated if the break pedal is stepped on (at S70). If the break is not in operation (No at S70), it is discriminated which transmission speed (n) was designated by the last command (at S72). When the last command transmission speed (n) is 3rd, the procedure is advanced to a step S77 so that the same upper limit transmission speed (3rd) is maintained.

When the break pedal is stepped on (Yes at S70), it is discriminated if the current shift position is 4th (at S74). When the current shift position is 4th (Yes at S74), the procedure is advanced to a step S77 where it is so controlled that the upper limit of shiftable transmission speeds should be 3rd. When the current speed is nor 4th but 3rd (No at S74), the procedure is advanced to a step S76 where it is so controlled that the upper limit of shiftable transmission speed should be 2nd. When it is discriminated at S66 that the last command designated 2nd (Yes at S66), or when it is discriminated at S72 that the last command designated 2nd, the procedure is advanced, through discrimination at S74, to a step S76 where the same upper limit (2nd) is maintained.

In the above control, it is discriminated if the last command transmission speed is 3rd at S72, and it is discriminated if the current shift position is 4th at S74. The control including such discrimination achieves smooth deceleration because 4th is shifted down to 3rd and then to 2nd, which prevents that the driver feels uncomfortably due to an excessive degree of engine brake. Moreover, in this embodiment, the shift-down to 3rd is controlled (at S77) only when there is a release of the accelerator pedal or active operation of the break pedal (Yes at S68), and thereafter, the further shift-down to 2nd is controlled (at S76) only when there is an active operation of the brake pedal (Yes at S70). This means that the shift-down to 2nd, which provides a strong engine brake, is achieved only when confirming a driver's definite intention of deceleration. The flowchart of Fig. 8 depicts operation of the primary upper-limit determining means and the first restriction means.

The upper limit command designating 2nd or 3rd is not directly supplied to A/T ECU 40, but compared with other control command to select one designating the minimum transmission speed (i.e., a transmission speed having the highest gear ratio) in the upper-limit designating routine by navigation processing unit 11.

Next, the transmission stand-by process (Step 80) of Fig. 9 will be described.

This process is in operation when it is inferred that the upper-limit control is not necessary when some event occurs and there is no fresh event.

For example, let us imagine that the vehicle goes through a turn or a curved road. When the accelerator pedal is released from a point far ahead of the turn so that the vehicle enters the turn at a low speed, since there is no occurrence of any event in a predetermined control zone, the shift-down control is not carried out by the above-described process. In this case, A/T ECU 40 controls the transmission speed in accordance with the normal transmission pattern. However, in the normal transmission control by A/T ECU 40, a shift-down from 4th to 3rd is carried out at a vehicle speed much lower than that of a shift-up from 3rd to 4th which is carried out after passing through the turn. This provides a smooth shift-down feeling to the driver, but tends to delay the shift-down timing so that a sufficient acceleration could not be obtained during and after turning. To cope with this problem, this embodiment has the transmission stand-by process that controls a shift-down at an appropriate timing, when the vehicle enters the turn, even if no event (release of the accelerator pedal) has happened within the control zone.

The transmission stand-by process will be described in reference to the flowchart of Fig. 9 showing a sub-routine thereof.

First, navigation processing unit 11 discriminates if the accelerator pedal keeps inoperative (at S81). When the accelerator pedal is stepped on by the driver (No at S81), which means that the driver has a positive intention to accelerate, the process ends. In this case, if the driver changes his or her mind to slow down the vehicle by releasing the accelerator pedal or actuating the brake pedal, the shift-down control is carried out by the above-described transmission speed command control process.

When the accelerator pedal keeps inoperative (Yes at S81), a stand-by vehicle speeds V3 and V2 are calculated (at S82). The stand-by vehicle speed V3 should be determined as one higher than a 4th-to-3rd shift-down point under the normal transmission control when the accelerator opening degree is almost zero. Likewise, the stand-by speed V2 is determined as one higher than a 3rd-to-2nd shift-down point under the normal transmission control when the accelerator opening degree is almost zero. This enables a shift-down control to be done at an earler timing than under the normal transmission control. Moreover, in this embodiment, the stand-by vehicle speeds V2 and V3 are determined to be higher than 2nd-to-3rd and 3rd-to-4th shift-up points, respectively, under the normal transmission control when the accelerator opening degree is the order of tends of percentages. This should prevent undesirable shift up and maintain a lower trasnmission stage for a longer period of time than under the normal transmission control during driving around a turn. When the vehicle speed is increased to the stand-by vehicle speed V3, it is discriminated that the vehicle has passed through the predetermined control section extending before and after the turn.

Then, it is discriminated if the current vehicle speed is higher than the stand-by vehicle speed V3 (at S83). While the current vehicle speed is lower than the stand-by vehicle speed V3 (No at S83), the transmission stand-by process terminates.

When the current vehicle speed becomes equal to or higher than the stand-by vehicle speed V3 (Yes at S83), which infers that a shift-down to 3rd is recommended right now, after discrimination at a step S84, the procedure is advanced to a step S87 where an upper-limit command designating 3rd is determined, then terminates.

At S84, it is discriminated if the current vehicle speed is higher than the stand-by vehicle speed V2. When the current vehicle speed is lower than the stand-by vehicle speed V2 (No at S84), which infers that 3rd should be maintained, the procedure is advanced to S87 where an upper-limit command designating 3rd is determined. When the current vehicle speed becomes equal to or higher than the stand-by vehicle speed V2 (Yes at S84), which infers that a shift-down to 2nd is recommended right now, it is then discriminated if the brake pedal is stepped on (at S85). If the brake pedal is stepped on (Yes at S85), an upper-limit command designating 2nd is determined (at S86), and the procedure terminates. In this process, the shift-down control to 2nd is carried only when the driver operates the brake pedal, which is confirmation of the driver's definite intention of deceleration. The flowchart of Fig. 9 depicts operation of the secondary upper-limit determining means and the second restriction means.

Fig. 10 shows the upper-limit command select process (Step 100).

More particularly, the turn-making control routine of S40 and the transmission speed stand-by control routine of S80 may determine different commands designating different upper-limit transmission speeds. In this case, a lower-speed designating one is selected by navigation processing unit 11 (at S102). The operation at S102 is a function of the upper-limit determining means.

For example, when the turn-making control routine (S40) determines a 3rd-designating command and the transmission speed stand-by control routine (S80) determines a 2nd-designating command, a lower-speed designating command, that is the 2nd-designating command is finally determined as an actual upper-limit command. This upper-limit command determined at S102 is supplied to A/T ECU 40 (at S104). The operation at S104 is a function of the command means. A/T ECU 40 receives the upper-limit command at the above-described step S200.

In this embodiment, the accelerator pedal and the brake pedal constitute means for detecting initiation of the driver's decelerating operation. Such detection means may comprise a steering sensor that detects rotation or equivalent motion of a steering, a sensor that detects operation of a turn indicating light, or a sensor that foresee a driver's operation from his or her eyes or brain waves.

In this embodiment, a direct shift-down from 4th to 2nd is prohibited, irrespective of the optimum transmission speed determined by the control. This provides smooth deceleration. A shift-down control to 2nd is carried out in response to the driver's operation of stepping the brake pedal on, by which the driver's definite intention of deceleration is confirmed. By the similar reason, a shift-down control to 3rd is carried out in response to a release of the accelerator pedal, which is believed to represent the driver's intention of deceleration. When the driver releases the accelerator pedal, he or she does not want speed-up at that time. Accordingly, the driver would have no uncomfortable feeling when the transmission is automatically controlled to be shifted down, followed by his or her own operation of releasing the accelerator pedal.

Navigation processing unit 11 and A/T ECU 40 are communicated with each other to achieve the control of this embodiment. However, all of the control operation may be achieved by one of the two units. When both contributes to the control, any part or role may be assigned thereto. For example, navigation processing unit 11 executes a routine that determines the optimum transmission speed based on the road data (that is the optimum transmission determining control routine in this embodiment), and A/T ECU 40 executes another routine that outputs a command regarding a selectable transmission range in response to a change of status of the accelerator pedal or the brake pedal (that is the turn-making control routine in this embodiment). In this case, it is not necessary that signals from the accelerator sensor and the brake sensor are supplied to A/T ECU 40, as in the foregoing embodiment.

In accordance with this embodiment, even when there is no event, an appropriate transmission control may be made in conformity with the road shape. For example, where the vehicle enters a control zone that starts a predetermined point prior to a turn with the accelerator pedal being already released, even if no fresh event occurs, in other words, even if the brake pedal is not stepped on, the upper-limit transmission control is carried out in response to the vehicle speed, when driving at a lower transmission speed is considered recommendable. In this embodiment, a subjective control that reflects the driver's intention and an objective control that reflects driving and road condition are well balanced with each other.

As described above, this invention has the primary upper-limit determining means that operates in response to the driver's own operation and the secondary upper-limit determining means that operates in response to the detected vehicle speed and the vehicle condition. Therefore, it is possible to provide a good balance between a subjective control that reflects the driver's intention and an objective control that reflects driving, road and vehicle condition.

### Comparative EMBODIMENT, not being part of the present invention

The control operation by a navigation processing unit 11 and A/T ECU 40 in accordance with this embodiment will be described. In this embodiment, the transmission control operation begins when a vehicle reaches a point ahead of the turn in a predetermined distance. More particularly, when the driver releases the accelerator pedal to decrease the throttle opening, the normal transmission control commands a shift-up, but in accordance with the control in this embodiment, the transmission is automatically shifted down to increase an engine brake, thereby lowering the vehicle speed and achieving a smooth driving at the turn.

When the vehicle is running on an uphill, a shift-down provides a greater engine brake to efficiently reduce the vehicle speed, so that the control operation does not begin until the vehicle reaches in vicinity to the turn. On the contrary, when the vehicle is running on a downhill, a shift-down provides a smaller engine brake and an insufficient effect of the vehicle speed reduction, so that the control operation begins when the vehicle reaches to a forward point relatively far from the turn.

The control operation in this embodiment will be described in reference to Figs. 11-13 showing flowcharts thereof. As shown in Fig. 11, the upper-limit determine routine includes a turn-making control initiation/termination discriminating sub-routine (S10a), an optimum transmission speed determining sub-routine (S400a), a turn-making control sub-routine (S80a) and an upper-limit command selecting sub-routine (S100a).

More particularly, navigation processing unit 11 first discriminates if the vehicle enters or leaves a predetermined control zone (at S10a). It then determines a primary upper-limit transmission speed (at S400a), determine a secondary upper-limit transmission speed in response to any event, that is a release from the accelerator pedal or stepping-on of the brake pedal (at S80a), and compare the primary and secondary upper-limit transmission speeds determined at S10a and S80a, respectively, to select a lower one, which is supplied to A/T ECU 40 (at S100a).

A/T ECU 40 determines the control transmission speed from comparison between the upper-limit transmission speed supplied from navigation processing unit 11 and a transmission speed controlled by itself in accordance with the transmission map under the normal transmission control. A command designating the control transmission speed is supplied to an actuator for actually executing a shift-change of A/T 41. Such control operation is substantially the same as that of the first embodiment, which has been described in reference to the flowchart of Fig. 4.

Figs. 12 and 13 illustrate a flowchart of the control initiation/termination discriminating sub-routine (S10a). This sub-routine is provided for the following reason.

When the control of this embodiment is in operation, it executes a shift change in a manner opposite to the shift change by the normal transmission control. More particularly, during the normal driving, when the accelerator pedal is released to decrease the throttle opening, the transmission will be shifted up automatically. In contrast, in accordance with the control of this embodiment, a release of the accelerator pedal and thus a decrease of the throttle opening will results in a shift-down.

Should the normal transmission control be still operative when the vehicle is running around the turn, the transmission would be shifted down in response to a release of the accelerator pedal in the foregoing manner, but thereafter soon shifted down by the normal transmission control. Thus, shift-up and shift-down are repeated many times while driving through the turn. No drive energy is transmitted at the time of shift change. A great drive energy is required to run across the turn, but could not be obtained when the transmission has been shifted up to have a higher shift position.

Considering the above facts, this embodiment provides the control initiation/termination discriminating sub-routine that discriminates if the vehicle enters or leaves the control zone including the turn. When the vehicle is within the control zone, a shift-up of the transmission is prohibited.

Specifically referring to the flowchart of Figs. 12 and 13, navigation processing unit 11 first discriminates if the current shift position is a drive range position (at S12a). If the current shift position is second or low range position (No at S12a), a flag of this control is set to zero (at S37a) and then the procedure is over.

When the current shift position is a drive range (Yes at S12a), navigation processing unit 11 receives an electric wave from an artificial satellite, through an antenna, using a GPS (Global Positioning System) to calculate the current vehicle position. It also reads out the road data from data memory 12a to recognize the current position on a map, and detects node points in the predetermined range that have been described in reference to Fig. 3 (at S14a). From the detected node points, it further discriminates if there is a turn on the scheduled drive route, and if there is a turn, detects a specific node point which is located at a peak of the turn (at S16a). By way of example, when there are three serial node points, and an angle of 170 or smaller degree is defined between a first segment connecting first and second node points and a second segment connecting second and third node points, it is inferred that there is a turn. A specific node point is one defining a greatest angle between preceding and succeeding node-connecting segments among those constituting the turn. There may be plural specific node points in one turn. Step S16a is operation of the turn detection means.

It is then discriminated if the flag has been set to one (at S18a). When the flag has been still zero (No at S18a) which means that the turn-making control has not yet been initiated, it calculates a distance from the current position to the specific position (at S20a), and discriminates if the current position has already entered a predetermined control zone (which begins at 500m ahead of the turn , for example), at S21a. When the vehicle is within the control zone (Yes at S21a), the flag is set to zero (at S22a), and then the procedure is terminated. When the vehicle is still beforehand the control zone (No at S21a), the procedure is terminated, in which case the flag remains nullified.

In this embodiment, a predetermined distance used in discrimination at S21a is a fixed distance. In a modification, it may be changed depending on a radius of curvature and/or a slope of the road from the current position to the turn. By way of example, it is discriminated if the vehicle reaches a position 700 meters ahead of a turn when the turn has a relatively small radius of curvature for smooth turning at a relatively low speed. In another example, the distance is set to 300 meters when the driving road is an uphill, in which case the vehicle speed may be lowered sufficiently, even in a relatively short distance drive.

When the flag has been set to zero (Yes at S18a) which means that the turn-making transmission control of this embodiment has already been initiated, it is then discriminated if the vehicle has already passed the peak of the turn (the specific point), at S23a. This is discrimination if the turn-making transmission control of this embodiment should be continued or terminated. Until the vehicle reaches the peak point (No at S23a), the procedure is over through discrimination (No) at S24a. S23a is operation of turn-peak passage discriminating means.

When detecting that the vehicle reaches the peak point (Yes at S23a), a peak flag is set to one (at S25a) and a vehicle speed at the time when passing through the peak point is inputted (at S26a). And, by executing the following operation, the turn-making transmission control is terminated. After the vehicle has passed the peak point (No at S23a), as far as the transmission control is still in operation (Yes at S24a), the procedure is advanced to a step S27a.

In this embodiment, the turn-making transmission control is made inoperative in response to detection that the vehicle has passed the peak point (specific point). The specific point may be changed. For example, the turn-making transmission control may be terminated at the time when the vehicle reached a point of 2/3 of the entire turn, or when it overruns the peak point over a predetermined distance or over a predetermined period of time, or when it reaches a point on the turn that varies depending on a radius of curvature of the turn.

Navigation processing unit 11 further operates to input the transmission speed that has been selected by A/T ECU 40 (at S27a), and compare this with a transmission speed that has been selected by itself (at S28a). When both have selected the same transmission speed (Yes at S28a), which means that application of the inventive transmission control of this embodiment is not necessary, the procedure is advanced to a step S37a where the flag of this turn-making transmission control operation is set to zero. In this case, the automatic transmission is controlled in a normal manner by using the transmission map. On the contrary, navigation processing unit 11 and A/T ECU 40 have selected different transmission speeds (No at S28a), the turn-making transmission control of this embodiment continues as follows for restricting a shift-up depending upon a vehicle speed.

Navigation processing unit 11 acquires the current vehicle speed Vnow and the peak-passage vehicle speed (at S29a), and discriminates if the current shift position is 2nd (at S30a). If the current shift position is 2nd (Yes at S30a), it then discriminates if the current vehicle speed Vnow is equal to or exceeds a first shift-up control speed (at S31a). The first shift-up control speed is a critical point for allowing shift-up from 2nd to 3rd. The first shift-up control speed has been determined by the peak-passage vehicle speed plus a predetermined speed (10 km/hour, for example). By way of example, if the vehicle passed the peak point at 35 km/hour, then the first shift-up control speed is determined as 45 km/hour. The first shift-up control speed is higher than a 2nd-to-3rd shift-up point of the transmission map used in the normal transmission control.

In this embodiment, the peak-passage vehicle speed is used in determination of the first shift-up control speed. In a modification, a vehicle speed after stepping the brake pedal on or after releasing the brake pedal during driving around the turn is detected for use as a basis for determination of the first shift-up control speed. In this case, the transmission is shifted down to 2nd when the brake pedal is stepped on, as described later.

A second shift-up control speed, that is a critical point for allowing shift-up from 3rd to 4th, is determined by the peak-passage vehicle speed plus another predetermined speed (25 km/hour, for example). If the vehicle passed the peak point at a speed of 35 km/hour, then the second shift-up control speed may be determined as 60 km/hour. Similar to the first shift-up control speed, the second shift-up control speed is higher than a 3rd-to-4th shift-up point of the transmission map used in the normal transmission control.

While the current vehicle speed Vnow is lower than the first shift-up control speed (No at S31a), a command designating that the upper limit should be 2nd is outputted (at S32a). In this situation, a shift-down to 1st is permitted, but a shift-up to 3rd is prohibited. A/T ECU 40 controls the transmission within such a selectable range. Then, a distance from the specific point (the specific node point) to the current position is calculated (at S35a), and if the calculated distance exceeds a predetermined distance (300 meters, for example) is discriminated (at S36a). While the vehicle remains within the predetermined distance from the specific node point (No at S36a), the procedure terminates, so that the turn-making control operation is continuously applied. When the vehicle reaches a position much far from the specific node point (Yes at S36a), which means that the vehicle has already escaped out of the control zone and the turn-making transmission control is no more required, the flag is set to zero (at S37a).

Turning to S31a, when the vehicle speed increases to or above the first shift-up control speed (Yes at S31a), the current vehicle speed Vnow is then compared with the second shift-up control speed (at S33a). When the current vehicle speed Vnow is equal to or higher than the first shift-up control speed but still does not reach the second shift-up control speed (No at S33a), an upper-limit command designating 3rd is supplied (at S34a), whereby A/T ECU 40 selects an optimum transmission speed within a range of 1st to 3rd in response to the vehicle speed and the throttle opening. The succeeding steps have been described hereinbefore. In accordance with the transmission control of this embodiment, a 2nd-to-3rd shift-up is executed at a vehicle speed higher than that executing the same shift-up by the normal transmission control. This means that 2nd shift position is kept for a longer period, which provides a greater drive energy and a more stabilized driving around a turn. Further, the vehicle may readily be accelerated after turning.

As far as the current vehicle speed Vnow is below the second shift-up control speed (No at S33a), an upper-limit command designating 3rd is outputted (at S34a). When the current vehicle speed Vnow exceeds the second shift-up control speed (Yes at S33a), which means that further prohibition against shift-up to 3rd would rather causes the driver to have a uncomfortable feeling, the flag is set to zero (at S37a) and the peak flag is also set to zero (at S38a), to cancel this turn-making transmission control. Now, the procedure of the turn-making transmission control terminates, and the transmission is allowed to be shifted up to 4th in accordance with the normal transmission control.

The succeeding sub-routines S400a, S80a and S100a are the same as those in the first embodiment which have been described in detail in reference to the flowcharts of Figs. 5, 8 and 10.

Next, the above-described control operation will be described by way of example, in reference to Fig. 14. Fig. 14(A) diagrammatically shows a road shape of a turn, Fig. 14 (B) shows the contents of shift-up restricting control operation, Fig. 14(C) shows fluctuation of a vehicle speed during driving around the turn, and Fig. 14(D) shows shift change timing as a result of the transmission control according to this embodiment.

As having described in reference to Fig. 7, navigation processing unit 11 makes operative a first shift-up restricting control when the vehicle reaches a point by a predetermined distance prior to the peak point of the turn (the specific point). In the example shown in Fig. 14, after the vehicle enters a first control zone where a shift-up to 3rd is restricted (see Fig. 14(B)), the driver releases the accelerator pedal (see Fig. 14(A)), whereby the transmission is automatically shifted-down from 4th to 3rd, as shown in Fig. 14(D). This shift-down provides a speed-down of the vehicle by applying thereto a strong engine brake, as shown in Fig. 14(C). This shift-down is carried out responsive to the driver's own operation of releasing the accelerator pedal, so that the driver does not have a uncomfortable feeling.

When the vehicle further advances to enter a second control zone where a shift-up to 2nd is restricted (see Fig. 14(B)), navigation processing unit 11 makes operative a second, more severe shift-up restricting control. This control is actually carried out when the driver steps the brake pedal on, which should be regarded as his or her definite intention of deceleration, after the vehicle enters the second control zone, as clearly shown in Fig. 14(D). This shift-down provides a relatively great reduction of the vehicle speed by applying a stronger engine brake, as shown in Fig. 14(C). This shift-down is carried out followed by the driver's own operation of stepping on the engine brake, so that the driver does not have a uncomfortable feeling.

As shown in Fig. 14(A), after the vehicle passes through the peak of the turn, the driver releases the accelerator pedal. Further, after leaving the second control zone, the accelerator pedal is stepped on. However, in accordance, with the turn-making control initiation/termination sub-routine shown in Figs. 12 and 13, until the current vehicle speed Vnow reaches the first shift-up control speed, a shift-up from 2nd to 3rd is prohibited by the command outputted at S32a in Fig. 13. When the current vehicle speed Vnow is increased by stepping-on of the accelerator pedal to reach the first shift-up control speed at a time t1, the upper-limit command designating 3rd is outputted from navigation processing unit 11 to A/T ECU 40 at S34a in Fig. 13. At this time, A/T ECU 40 have already selected, based on the vehicle speed and the throttle opening, 3rd or 4th speed in accordance with the transmission pattern of the normal transmission control. Thus, the transmission is automatically shifted up to 3rd in quick response to the upper-limit command of 3rd speed, at the time t1, as shown in Fig. 14(D).

Thereafter, the driver continues accelerating to smoothly drive out of the turn. Since the transmission remains 3rd speed, smooth acceleration with a sufficient drive energy may be achieved.

When the vehicle speed Vnow reaches the second shift-up control speed at a time t2, in accordance with operation at S37a where the upper-limit command designating 3rd is cancelled. Up to this time, since A/T ECU 40 have already selected 4th speed in accordance with the transmission pattern of the normal transmission control, the transmission is automatically shifted up to 4th in quick response to cancellation of the upper-limit command of 3rd speed, at the time t2, as shown in Fig. 14(D).

In this embodiment, during drive around the turn, a shift-up is permitted provided that the vehicle speed exceeds the shift-up point of the transmission pattern in accordance with the normal transmission control. This achieves an appropriate shift-up timing.

The first and second shift-up control speeds is determined on the basis of a vehicle speed at a time when the driver releases the brake pedal. This is not limitative and may be modified as far as they are higher than the shift-up points by the normal transmission control.

As described above, the inventive transmission control of this embodiment will provide an appropriate shift change during turn-making drive. When the vehicle is driving around the turn, the driver operates frequently and repeatedly the accelerator pedal and the brake pedal resulting in fluctuation of the throttle opening. In this situation, the normal transmission control that controls shift changes depending upon the vehicle speed and the throttle opening would not always be advantageous. Under the inventive turn-making transmission control operation of this embodiment, during driving around the turn, unnecessary and undesired shift-up is restricted and a relatively low shift position is maintained, which produces a greater drive energy and provides a smooth and stabilized driving.

When the vehicle passes the turn over a predetermined distance, the turn-making transmission control operation of this embodiment becomes inoperative so that a shift-up may be made in accordance with the normal transmission control.

### SECOND EMBODIMENT

The contents of the inventive transmission control of this embodiment made by navigation processing unit 11 and A/T ECU 40 will be described in reference to flowcharts of Figs. 15 and 16. The flowchart of Fig. 15 shows an upper-limit set routine by navigation processing unit 11.

As shown in Fig. 15, the upper-limit set routine of this embodiment comprises transmission speed holding operation (S400b), a turn-making control operation (S80b), a transmission speed stand-by operation (S90b) and an upper-limit command determining operation (S100b).

The sub-routines S10b, S80b, S90b and S100b are the same as those in the first embodiment and, therefore, needs no further description here.

Fig. 16 shows a sub-routine of the transmission speed holding operation which is carried out based on an optimum transmission speed determined by the preceding sub-routine S10b. As shown, when the optimum transmission speed is 4th speed (Yes at S22b), that is a highest one of 4-speed transmission, an upper-limit command designating 4th speed is outputted (at S38b), then the procedure is returned.

When the optimum transmission speed determined by the sub-routine S10b is 3rd speed (No at S22b and Yes at S24b), the current shift position is confirmed at S26b. When the current shift position is 4th, the upper-limit command designating 4th speed is outputted (at S38b), then the procedure is returned. When the current shift position is 3rd, the upper-limit command designating 3rd speed is outputted (at S28b), then the procedure is returned.

When the current shift position is 2nd, the upper-limit command designating 3rd speed is outputted (at S28b), as in the case of 3rd speed. This prevents application of too much low gear ratio of 2nd speed and allows a shift-up to 3rd which has been determined as the optimum transmission speed (at S24b).

When the optimum transmission speed determined by the sub-routine S10b is 2nd speed (No at S22b and S24b and Yes at S30b), the current shift position is confirmed at S32b. Depending upon the current shift position, the upper limit commands are outputted at S34b, S36b and S38b, respectively, so that no shift-up from the current shift position is permitted. As above described, the transmission speed holding operation determines the first upper-limit transmission speed to restrict unnecessary shift-up from the current shift position.

Next, the turn-making control operation S80b determines the upper-limit transmission speed in response to "event", in the above-described manner. The transmission speed stand-by operation also determines the upper-limit transmission speed, in the above-described manner. Among these three upper-limit transmission speeds, a lowest one is selected by the upper-limit command select operation S100b, which is supplied to A/T ECU 40.

As above described, this embodiment includes the transmission speed holding operation (S40), as well as the turn-making control operation (S80b). This restricts a shift-up by the normal transmission pattern or shift map, thereby facilita ting a smooth shift-down control. More particularly, even when there is a release of the accelerator pedal, that is an "event" for commencing the turn-making transmission control of the present invention, the current shift position is maintained by the holding operation (S40), which would otherwise be shifted up in response to the release of the accelerator pedal under the normal transmission control.

Although a 4-speed automatic transmission is referred to in the forgoing three embodiments,, this invention is of course applicable to 3-speed or 5-speed automatic transmission, and further to a stageless automatic transmission utilizing an endless belt. When this invention is applied to the multi-speed transmission, i.e stageless transmission not the upper-limit transmission speed but the upper-limit gear-ratio is controlled.

### Industrial Applicability

As having been described, the present invention relates to the vehicle control device that is especially useful in automatic transmission control. In particular, this invention may be used in combination with the navigation system device for automatic transmission control by utilizing road data and other data held in the navigation system device.

## Claims

1. A vehicle control device (1) comprising:
(a) road information obtaining means (12) for obtaining road information,
(b) current position sensor means (13) for detecting an on-road current position of a vehicle,
(c) an automatic transmission (41),
(d) recommended vehicle speed determining means for determining, in accordance with the road information, a recommended vehicle speed (V0) at a time when the vehicle passes through a specific position on the road,
(e) distance calculating means for calculating a distance (L) from the current position to the specific position (N1, N2),
(f) optimum gear-ratio determining means for determining, in accordance with said recommended vehicle speed (V0) and said distance (L) to a specific position (N1, N2), an optimum gear-ratio at which the vehicle could run from the current position detected by said current position sensor means (13) through a specific position (N1, N2)
(g) decelerating operation sensor means (32, 33, 34, 35) for detecting that a driver begins decelerating operation,
(h) drive condition sensor means for detecting drive condition including a vehicle speed (V),
(i) primary upper-limit set means for determining said optimum gear-ratio determined by said optimum gear-ratio determining means as a primary upper-limit gear-ratio, in response to detection of initiation of the driver's decelerating operation by said decelerating operation sensor means (32, 34, 33, 35),
(j) secondary upper-limit set means for determining a specific gear-ratio as a secondary upper-limit gear-ratio, independent of detection of initiation of said driver's decelerating operation, after determination of said primary upper-limit gear-ratio by said primary upper-limit set means,
(k) upper-limit gear-ratio determining means for comparing said primary and secondary upper-limit gear-ratios to select a lower one and outputting an upper-limit command designating said selected gear-ratio, and
(l) restriction means for restricting a shiftable range of said automatic transmission by setting said upper-limit gear-ratio designated by said upper-limit command.

2. The vehicle control device (1) according to claim 1 wherein said drive condition sensor means includes a vehicle speed sensor (31), and said secondary upper-limit set means determines said secondary upper-limit gear-ratio in accordance with the detected vehicle speed (V).

3. The vehicle control device (1) according to claim 2 wherein said secondary upper-limit set means includes means for calculating a reference vehicle speed (V0), and determines said secondary upper-limit gear-ratio by comparing the vehicle speed (V) detected by said vehicle speed sensor (31) with the reference vehicle speed (V0).

4. The vehicle control device (1) according to claim 1 wherein said drive condition sensor means includes a current gear-ratio sensor that detects a current gear-ratio, and said secondary upper-limit set means determines said secondary upper-limit gear-ratio by comparing the current gear-ratio detected by said current gear-ratio sensor with the optimum gear-ratio determined by said optimum gear-ratio detennining means.

5. The vehicle control device (1) according to claim 4 wherein said secondary upper-limit set means compares the detected current gear-ratio with the optimum gear-ratio determined by said optimum gear-ratio determining means, thereby determining the current gear-ratio as the secondary upper-limit gear-ratio, when the optimum gear-ratio is larger.

6. The vehicle control device (1) according to claim 1 wherein said drive condition sensor means includes a vehicle speed sensor (31), and said secondary upper-limit set means determines the secondary upper-limit gear-ratio in accordance with a vehicle speed (V) at a time when the vehicle passes through a curve detected by a curve detecting means and the current vehicle speed detected by said vehicle speed sensor (31).

7. The vehicle control device (1) according to claim 6 wherein said drive condition sensor means further includes a current gear-ratio sensor that detects a current gear-ratio, and said secondary upper-limit set means further includes means for discriminating that the vehicle passes through the curve, said secondary upper-limit set means determining the secondary upper-limit gear-ratio in accordance with the vehicle speed (V) at the time of passing through the curve, the detected current gear-ratio and an increase of the vehicle speed after passing through the curve, when discriminating that the vehicle has passed through the curve.

8. The vehicle control device (1) according to claim 6 or 7 wherein said secondary upper-limit set means further includes means for discriminating that the vehicle overruns the curve over a predetermined distance, said secondary upper-limit set means discontinues the upper-limit determining operation when discriminating that the vehicle has overrun the curve over the predetermined distance.

9. The vehicle control device (1) according to any one of claims 1-8 wherein the curve comprises a series of nodes included in the road information.

10. The vehicle control device (1) according to any one of claims 1-8 wherein the curve includes a specific forward point.

11. The vehicle control device (1) according to any one of claims 1 to 9 wherein said recommended speed calculating means calculates the recommended vehicle speed (V0) in accordance with radius of curvature of the curve ahead detected by said curve detecting means.

12. The vehicle control device (1) according to any one of claims 1-10 wherein said decelerating operation sensor means (32, 33, 34, 35) detects an inoperative status of an accelerator pedal and/or an operative status of a brake pedal.

13. The vehicle control device (1) according to any one of claims 1-10 wherein said decelerating operation sensor means (32, 33, 34, 35) detects at least one of switch-on of a headlamp, switch-on of a turn indicating light, switch-on of a wiper switch, decrease of a stepping degree of an accelerator pedal and stepping-on of a brake pedal.

14. The vehicle control device (1) according to claim 12 wherein said inoperative status of the accelerator pedal means that an opening degree of the accelerator pedal becomes nearly zero.

15. The vehicle control device (1) according to claim 12 wherein said inoperative status of the accelerator pedal means that an opening degree of the accelerator pedal is decreased by a predetermined ratio.

16. The vehicle control device according to claim 12 wherein said inoperative status of the accelerator pedal means that an opening degree of the accelerator pedal shows at least one of a predetermined ratio of change, a predetermined amount of reduction, a predetermined rate of change, a predetermined rate of reduction, a predetermined acceleration of change and a predetermined deceleration.

17. The vehicle control device (1) according to claim 12 wherein said inoperative status of the accelerator pedal means that an opening degree of the accelerator pedal is decreased by a predetermined ratio to substantially zero.

18. The vehicle control device (1) according to claim 12 wherein said inoperative status of the accelerator pedal means that a throttle opening shows at least one of a predetermined ratio of change, a predetermined amount of reduction, a predetermined rate of reduction and a predetermined deceleration.

19. The vehicle control device (1) according to any one of claims 1-10 wherein said automatic transmission has a plurality of shiftable transmission speeds, and the upper-limit gear-ratio is an upper-limit transmission speed.

20. The vehicle control device (1) according to any one of claims 1-10 which further comprises drive route searching means for searching a scheduled drive route of the vehicle, and specific position sensor means for detecting a position data of a specific position on the scheduled drive route from said road information obtaining means.

21. The vehicle control device (1) according to claim 20 which further comprises goal set means for setting a goal, said scheduled drive route meaning a drive route to the goal when the goal has been set, said scheduled drive route meaning a imaginary drive route from the current position in the current vehicle direction when the goal has not yet been set.

22. The vehicle control device (1) according to any one of claims 1-10 which further comprises shift-position sensor means mechanically or electrically connected to said automatic transmission to detect a shift-position, said primary and secondary upper-limit set means determining the primary and secondary upper-limits respectively when said shift-position sensor means detects that said automatic transmission is currently at a drive range position.

23. The vehicle control device (1) according to one of claims 1-13 wherein said automatic transmission has a varying transmission speed.

## Patentansprüche

1. Fahrzeugsteuervorrichtung (1) mit:
(a) einer Erhalteeinrichtung (12) für Straßeninformationen zum Erhalten von Straßeninformationen,
(b) einer Sensoreinrichtung (13) für aktuelle Positionen zum Detektieren einer aktuellen Position eines Fahrzeugs auf einer Straße,
(c) einem Automatikgetriebe (41),
(d) einer Bestimmungseinrichtung für empfohlene Fahrzeuggeschwindigkeiten zum in Übereinstimmung mit den Straßeninformationen erfolgenden Bestimmen einer empfohlenen Fahrzeuggeschwindigkeit (V0) zu einer Zeit, zu der das Fahrzeug eine spezifische Position auf der Straße durchfährt,
(e) einer Entfernungsberechnungseinrichtung zum Berechnen einer Entfernung (L) von der aktuellen Position zur spezifischen Position (N1, N2),
(f) einer Bestimmungseinrichtung für optimale Übersetzungen zum in Übereinstimmung mit der empfohlenen Fahrzeuggeschwindigkeit (V0) und der Entfernung (L) zu einer spezifischen Position (N1, N2) erfolgenden Bestimmen einer optimalen Übersetzung, mit der das Fahrzeug von der durch die Sensoreinrichtung (13) für aktuelle Positionen detektierten aktuellen Position eine spezifische Position (N1, N2) durchfahren könnte,
(g) einer Sensoreinrichtung (32, 33, 34, 35) für Verlangsamungsvorgänge zum Detektieren, daß ein Fahrer einen Verlangsamungsvorgang beginnt,
(h) einer Sensoreinrichtung für Fahrzustände zum Detektieren eines Fahrzustands mit einer Fahrzeuggeschwindigkeit (V),
(i) einer primären Obergrenzen-Einstelleinrichtung zum Bestimmen der durch die Bestimmungseinrichtung für optimale Übersetzungen bestimmten optimalen Übersetzung als primäre Obergrenzenübersetzung als Reaktion auf die Detektion der Einleitung des Verlangsamungsvorgangs des Fahrers durch die Sensoreinrichtung (32, 33, 34, 35) für Verlangsamungsvorgänge,
(j) einer sekundären Obergrenzen-Einstelleinrichtung zum Bestimmen einer spezifischen Übersetzung als sekundäre Obergrenzenübersetzung unabhängig von der Detektion der Einleitung des Verlangsamungsvorgangs des Fahrers nach Bestimmung der primären Obergrenzenübersetzung durch die primäre Obergrenzen-Einstelleinrichtung,
(k) einer Obergrenzenübersetzungs-Bestimmungseinrichtung zum Vergleichen der primären und sekundären Obergrenzenübersetzung, um eine geringere auszuwählen, und Ausgeben eines Obergrenzenbefehls, der die ausgewählte Übersetzung spezifiziert, und
(l) einer Beschränkungseinrichtung zum Beschränken eines schaltbaren Bereichs des Automatikgetriebes durch Einstellen der durch den Obergrenzenbefehl spezifizierten Obergrenzenübersetzung.

2. Fahrzeugsteuervorrichtung (1) nach Anspruch 1, wobei die Sensoreinrichtung für Fahrzustände einen Fahrzeuggeschwindigkeitssensor (31) aufweist und die sekundäre Obergrenzen-Einstelleinrichtung die sekundäre Obergrenzenübersetzung in Übereinstimmung mit der detektierten Fahrzeuggeschwindigkeit (V) bestimmt.

3. Fahrzeugsteuervorrichtung (1) nach Anspruch 2, wobei die sekundäre Obergrenzen-Einstelleinrichtung eine Einrichtung zum Berechnen einer Referenzfahrzeuggeschwindigkeit (V0) aufweist und die sekundäre Obergrenzenübersetzung durch Vergleichen der durch den Fahrzeuggeschwindigkeitssensor (31) detektierten Fahrzeuggeschwindigkeit (V) mit der Referenzfahrzeuggeschwindigkeit (V0) bestimmt.

4. Fahrzeugsteuervorrichtung (1) nach Anspruch 1, wobei die Sensoreinrichtung für Fahrzeugzustände einen Sensor für aktuelle Übersetzungen aufweist, der eine aktuelle Übersetzung detektiert, und die sekundäre Obergrenzen-Einstelleinrichtung die sekundäre Obergrenzenübersetzung durch Vergleichen der durch den Sensor für aktuelle Übersetzungen detektierten aktuellen Übersetzung mit der durch die Bestimmungseinrichtung für optimale Übersetzungen bestimmten optimalen Übersetzung bestimmt.

5. Fahrzeugsteuervorrichtung (1) nach Anspruch 4, wobei die sekundäre Obergrenzen-Einstelleinrichtung die detektierte aktuelle Übersetzung mit der durch die Bestimmungseinrichtung für optimale Übersetzungen bestimmten optimalen Übersetzung vergleicht, wodurch die aktuelle Übersetzung als sekundäre Obergrenzenübersetzung bestimmt wird, wenn die optimale Übersetzung größer ist.

6. Fahrzeugsteuervorrichtung (1) nach Anspruch 1, wobei die Sensoreinrichtung für Fahrzustände einen Fahrzeuggeschwindigkeitssensor (31) aufweist und die sekundäre Obergrenzen-Einstelleinrichtung die sekundäre Obergrenzenübersetzung in Übereinstimmung mit einer Fahrzeuggeschwindigkeit (V) zu einer Zeit, zu der das Fahrzeug eine durch eine Kurvendetektionseinrichtung detektierte Kurve durchfährt, und der durch den Fahrzeuggeschwindigkeitssensor (31) detektierten aktuellen Fahrzeuggeschwindigkeit bestimmt.

7. Fahrzeugsteuervorrichtung (1) nach Anspruch 6, wobei die Sensoreinrichtung für Fahrzustände ferner einen Sensor für aktuelle Übersetzungen aufweist, der eine aktuelle Übersetzung detektiert, und die sekundäre Obergrenzen-Einstelleinrichtung ferner eine Einrichtung zum Unterscheiden aufweist, daß das Fahrzeug die Kurve durchfährt, wobei die sekundäre Obergrenzen-Einstelleinrichtung die sekundäre Obergrenzenübersetzung in Übereinstimmung mit der Fahrzeuggeschwindigkeit (V) zur Zeit des Durchfahrens der Kurve, der detektierten aktuellen Übersetzung und einer Zunahme der Fahrzeuggeschwindigkeit nach Durchfahren der Kurve bestimmt, wenn sie unterscheidet, daß das Fahrzeug die Kurve durchfahren hat.

8. Fahrzeugsteuervorrichtung (1) nach Anspruch 6 oder 7, wobei die sekundäre Obergrenzen-Einstelleinrichtung ferner eine Einrichtung zum Unterscheiden aufweist, daß das Fahrzeug die Kurve über eine vorbestimmte Entfernung hinter sich läßt und die sekundäre Obergrenzen-Einstelleinrichtung den Obergrenzenbestimmungsvorgang aussetzt, wenn sie unterscheidet, daß das Fahrzeug die Kurve über die vorbestimmte Entfernung hinter sich gelassen hat.

9. Fahrzeugsteuervorrichtung (1) nach einem der Ansprüche 1 bis 8, wobei die Kurve eine Folge von Knoten aufweist, die zu den Straßeninformationen gehören.

10. Fahrzeugsteuervorrichtung (1) nach einem der Ansprüche 1 bis 8, wobei die Kurve einen spezifischen Vorwärtspunkt aufweist.

11. Fahrzeugsteuervorrichtung (1) nach einem der Ansprüche 1 bis 9, wobei die Berechnungseinrichtung für empfohlene Geschwindigkeiten die empfohlene Fahrzeuggeschwindigkeit (V0) in Übereinstimmung mit einem Krümmungsradius der durch die Kurvendetektionseinrichtung detektierten vorausliegenden Kurve berechnet.

12. Fahrzeugsteuervorrichtung (1) nach einem der Ansprüche 1 bis 10, wobei die Sensoreinrichtung (32, 33, 34, 35) für Verlangsamungsvorgänge einen nicht betätigten Zustand eines Gaspedals und/oder einen betätigten Zustand eines Bremspedals detektiert.

13. Fahrzeugsteuervorrichtung (1) nach einem der Ansprüche 1 bis 10, wobei die Sensoreinrichtung (32, 33, 34, 35) für Verlangsamungsvorgänge das Einschalten eines Scheinwerfers, Einschalten einer Blinkleuchte, Einschalten eines Wischerschalters, Verringern eines Betätigungsgrads eines Gaspedals und/oder Betätigen eines Bremspedals detektiert.

14. Fahrzeugsteuervorrichtung (1) nach Anspruch 12, wobei der nicht betätigte Zustand des Gaspedals bedeutet, daß ein Öffnungsgrad des Gaspedals nahezu null wird.

15. Fahrzeugsteuervorrichtung (1) nach Anspruch 12, wobei der nicht betätigte Zustand des Gaspedals bedeutet, daß ein Öffnungsgrad des Gaspedals um ein vorbestimmtes Verhältnis verringert ist.

16. Fahrzeugsteuervorrichtung (1) nach Anspruch 12, wobei der nicht betätigte Zustand des Gaspedals bedeutet, daß ein Öffnungsgrad des Gaspedals ein vorbestimmtes Änderungsverhältnis, einen vorbestimmten Verringerungsbetrag, eine vorbestimmte Änderungsgeschwindigkeit, eine vorbestimmte Verringerungsgeschwindigkeit, eine vorbestimmte Änderungsbeschleunigung und/oder eine vorbestimmte Verlangsamung zeigt.

17. Fahrzeugsteuervorrichtung (1) nach Anspruch 12, wobei der nicht betätigte Zustand des Gaspedals bedeutet, daß ein Öffnungsgrad des Gaspedals um ein vorbestimmtes Verhältnis im wesentlichen auf null verringert ist.

18. Fahrzeugsteuervorrichtung (1) nach Anspruch 12, wobei der nicht betätigte Zustand des Gaspedals bedeutet, daß eine Drosselklappenöffnung ein vorbestimmtes Änderungsverhältnis, einen vorbestimmten Verringerungsbetrag, eine vorbestimmte Verringerungsgeschwindigkeit und/oder eine vorbestimmte Verlangsamung zeigt.

19. Fahrzeugsteuervorrichtung (1) nach einem der Ansprüche 1 bis 10, wobei das Automatikgetriebe mehrere schaltbare Getriebedrehzahlen hat und die Obergrenzenübersetzung eine Obergrenzengetriebedrehzahl ist.

20. Fahrzeugsteuervorrichtung (1) nach einem der Ansprüche 1 bis 10, die ferner eine Fahrtrouten-Sucheinrichtung zum Suchen nach einer planmäßigen Fahrtroute des Fahrzeugs und eine Sensoreinrichtung für spezifische Positionen zum Detektieren von Positionsdaten einer spezifischen Position auf der planmäßigen Fahrtroute von der Erhalteeinrichtung für Straßeninformationen aufweist.

21. Fahrzeugsteuervorrichtung (1) nach Anspruch 20, die ferner eine Zieleinstelleinrichtung zum Einstellen eines Ziels aufweist, wobei die planmäßige Fahrtroute eine Fahrtroute zum Ziel bedeutet, wenn das Ziel eingestellt wurde, und die planmäßige Fahrtroute eine gedachte Fahrtroute von der aktuellen Position in der aktuellen Fahrtrichtung bedeutet, wenn das Ziel noch nicht eingestellt wurde.

22. Fahrzeugsteuervorrichtung (1) nach einem der Ansprüche 1 bis 10, die ferner eine Sensoreinrichtung für Schaltpositionen aufweist, die mit dem Automatikgetriebe mechanisch oder elektrisch verbunden ist, um eine Schaltposition zu detektieren, wobei die primäre und sekundäre Obergrenzen-Einstelleinrichtung die primäre bzw. sekundäre Obergrenze bestimmt, wenn die Sensoreinrichtung für Schaltpositionen detektiert, daß sich das Automatikgetriebe derzeit in einer Fahrbereichsposition befindet.

23. Fahrzeugsteuervorrichtung (1) nach einem der Ansprüche 1 bis 13, wobei das Automatikgetriebe eine variierende Getriebedrehzahl hat.

## Revendications

1. Dispositif de commande (1) de véhicule comprenant :
(a) un moyen d'obtention (12) d'informations routières pour obtenir des informations routières,
(b) un moyen de détection (13) de la position actuelle, pour détecter une position actuelle sur route d'un véhicule,
(c) une transmission automatique (41),
(d) un moyen de détermination de vitesse du véhicule recommandée pour déterminer, selon les informations routières, une vitesse du véhicule recommandée (V0) à un moment où le véhicule passe par une position spécifique sur la route,
(e) un moyen de calcul de distance pour calculer la distance (L) de la position actuelle à la position spécifique (N1, N2),
(f) un moyen de détermination du rapport optimal pour déterminer, selon ladite vitesse du véhicule recommandée (V0 et ladite distance (L) par rapport à une position spécifique (N1, N2), un rapport optimal sur lequel le véhicule peut se déplacer depuis la position actuelle détectée par ledit moyen de détection (13) de la position actuelle jusqu'à une position spécifique (N1, N2),
(g) un moyen de détection d'opération de décélération (32, 33, 34, 35) pour détecter qu'un conducteur commence une opération de décélération,
(h) un moyen de détection de condition de conduite pour détecter la condition de conduite, y compris une vitesse (V) du véhicule,
(i) un moyen de sélection de limite supérieure primaire pour déterminer ledit rapport optimal déterminé par ledit moyen de détermination du rapport optimal comme rapport de limite supérieure primaire, en réponse à la détection de l'amorce de l'opération de décélération du conducteur par ledit moyen de détection d'opération de décélération (32, 33, 34, 35),
(j) un moyen de sélection de limite supérieure secondaire pour déterminer un rapport spécifique comme rapport de limite supérieure secondaire, indépendant de la détection de l'amorce de ladite opération de décélération du conducteur, après la détermination dudit rapport de limite supérieure primaire par ledit moyen de sélection de limite supérieure primaire,
(k) un moyen de détermination de rapport de limite supérieure pour comparer lesdits rapports de limite supérieure primaire et secondaire pour sélectionner le plus bas et délivrer une instruction de limite supérieure désignant ledit rapport sélectionné, et
(l) un moyen de restriction pour restreindre une gamme de passage de ladite transmission automatique en sélectionnant ledit rapport de limite supérieure désigné par ladite instruction de limite supérieure.

2. Dispositif de commande (1) de véhicule selon la revendication 1, dans lequel ledit moyen de détection de condition de conduite comprend un capteur de vitesse (31) du véhicule, et ledit moyen de sélection de limite supérieure secondaire détermine ledit rapport de limite supérieure secondaire selon la vitesse du véhicule détectée (V).

3. Dispositif de commande (1) de véhicule selon la revendication 2, dans lequel ledit moyen de sélection de limite supérieure secondaire comprend un moyen servant à calculer une vitesse de véhicule de référence (V0), et détermine ledit rapport de limite supérieure secondaire en comparant la vitesse du véhicule (V) détectée par ledit capteur de vitesse (31) du véhicule avec la vitesse de véhicule de référence (V0).

4. Dispositif de commande (1) de véhicule selon la revendication 1, dans lequel ledit moyen de détection de condition de conduite comprend un détecteur de rapport actuel qui détecte un rapport actuel, et ledit moyen de sélection de limite supérieure secondaire détermine ledit rapport de limite supérieure secondaire en comparant le rapport actuel détecté par ledit détecteur de rapport actuel avec le rapport optimal déterminé par ledit moyen de détermination du rapport optimal.

5. Dispositif de commande (1) de véhicule selon la revendication 4, dans lequel ledit moyen de sélection de limite supérieure secondaire compare le rapport actuel détecté avec le rapport optimal déterminé par ledit moyen de détermination du rapport optimal, déterminant de ce fait le rapport actuel comme le rapport de limite supérieure secondaire, quand le rapport optimal est plus grand.

6. Dispositif de commande (1) de véhicule selon la revendication 1, dans lequel ledit moyen de détection de condition de conduite comprend un capteur de vitesse (31) du véhicule, et ledit moyen de sélection de limite supérieure secondaire détermine le rapport de limite supérieure secondaire d'après la vitesse du véhicule (V) à un moment où le véhicule passe dans un virage détecté par un moyen de détection de virage et la vitesse actuelle du véhicule détectée par ledit capteur de vitesse (31) du véhicule.

7. Dispositif de commande (1) de véhicule selon la revendication 6, dans lequel ledit moyen de détection de condition de conduite comprend en outre un détecteur de rapport actuel qui détecte un rapport actuel, et ledit moyen de sélection de limite supérieure secondaire comprend en outre un moyen pour déterminer si le véhicule passe dans le virage, ledit moyen de sélection de limite supérieure secondaire déterminant le rapport de limite supérieure secondaire d'après la vitesse du véhicule (V) à un moment où il passe dans le virage, le rapport actuel détecté et une augmentation de la vitesse du véhicule après le passage dans le virage, lorsqu'il est déterminé que le véhicule est passé dans le virage.

8. Dispositif de commande (1) de véhicule selon la revendication 6 ou 7, dans lequel ledit moyen de sélection de limite supérieure secondaire comprend en outre un moyen pour déterminer si le véhicule dépasse le virage sur une distance prédéterminée, ledit moyen de sélection de limite supérieure secondaire interrompt l'opération de détermination de la limite supérieure lorsqu'il est établi que le véhicule a dépassé le virage sur la distance prédéterminée.

9. Dispositif de commande (1) de véhicule selon l'une quelconque des revendications 1 à 8, dans lequel le virage comprend une série de noeuds inclus dans les informations routières.

10. Dispositif de commande (1) de véhicule selon l'une quelconque des revendications 1 à 8, dans lequel le virage comporte un point avant spécifique.

11. Dispositif de commande (1) de véhicule selon l'une quelconque des revendications 1 à 9, dans lequel ledit moyen de calcul de vitesse recommandée calcule la vitesse du véhicule recommandée (V0) d'après le rayon de courbure du virage à venir détecté par ledit moyen de détection de virage.

12. Dispositif de commande (1) de véhicule selon l'une quelconque des revendications 1 à 10, dans lequel ledit moyen de détection d'opération de décélération (32, 33, 34, 35) détecte un état inopérant d'une pédale d'accélérateur et/ou un état inopérant d'une pédale de frein.

13. Dispositif de commande (1) de véhicule selon l'une quelconque des revendications 1 à 10, dans lequel ledit moyen de détection d'opération de décélération (32, 33, 34, 35) détecte au moins un élément parmi l'allumage d'un phare, l'allumage d'un clignotant, l'allumage d'un essuie-glace, la diminution du degré d'enfoncement d'une pédale d'accélérateur et l'actionnement d'une pédale de frein.

14. Dispositif de commande (1) de véhicule selon la revendication 12, dans lequel ledit état inopérant de la pédale d'accélérateur signifie que le degré d'ouverture de la pédale d'accélérateur devient presque nul.

15. Dispositif de commande (1) de véhicule selon la revendication 12, dans lequel ledit état inopérant de la pédale d'accélérateur signifie que le degré d'ouverture de la pédale d'accélérateur est réduit d'un rapport prédéterminé.

16. Dispositif de commande (1) de véhicule selon la revendication 12, dans lequel ledit état inopérant de la pédale d'accélérateur signifie que le degré d'ouverture de la pédale d'accélérateur montre au moins une caractéristique parmi un rapport de variation prédéterminé, une quantité de réduction prédéterminée, un taux de variation prédéterminé, un taux de réduction prédéterminé, une accélération de variation prédéterminée et une décélération prédéterminée.

17. Dispositif de commande (1) de véhicule selon la revendication 12, dans lequel ledit état inopérant de la pédale d'accélérateur signifie que le degré d'ouverture de la pédale d'accélérateur est diminué d'un rapport prédéterminé sensiblement jusqu'à zéro.

18. Dispositif de commande (1) de véhicule selon la revendication 12, dans lequel ledit état inopérant de la pédale d'accélérateur signifie qu'une ouverture de commande des gaz montre au moins une caractéristique parmi un rapport de variation prédéterminé, une quantité de réduction prédéterminée, un taux de réduction prédéterminé et une décélération prédéterminée.

19. Dispositif de commande (1) de véhicule selon l'une quelconque des revendications 1 à 10, dans lequel ladite transmission automatique a une pluralité de vitesses de transmission qui peuvent être passées, et le rapport de limite supérieure est une vitesse de transmission de limite supérieure.

20. Dispositif de commande (1) de véhicule selon l'une quelconque des revendications 1 à 10, qui comprend en outre un moyen de recherche d'itinéraire pour chercher un itinéraire prévu du véhicule, et un moyen de détection de position spécifique pour détecter une donnée de position d'une position spécifique sur l'itinéraire prévu à partir dudit moyen d'obtention d'informations routières.

21. Dispositif de commande (1) de véhicule selon la revendication 20, qui comprend en outre un moyen de sélection de but pour sélectionner un but, ledit itinéraire prévu signifiant un itinéraire jusqu'au but quand le but a été sélectionné, ledit itinéraire prévu signifiant un itinéraire imaginaire depuis la position actuelle dans la direction actuelle du véhicule quand le but n'a pas encore été sélectionné.

22. Dispositif de commande (1) de véhicule selon l'une quelconque des revendications 1 à 10, qui comprend en outre un moyen de détection de position de passage, connecté de manière mécanique ou électrique à ladite transmission automatique pour détecter une position de passage, lesdits moyens de sélection de limites supérieures primaire et secondaire déterminant respectivement les limites supérieures primaire et secondaire quand ledit moyen de détection de position de passage détecte que ladite transmission automatique est actuellement dans une position de gamme de conduite.

23. Dispositif de commande (1) de véhicule selon l'une quelconque des revendications 1 à 13, dans lequel ladite transmission automatique a une vitesse de transmission variable.
